# EUROPÄISCHE PATENTSCHRIFT

(11) **EP 2 337 703 B1**
(45) Veröffentlichungstag und Bekanntmachung des Hinweises auf die Patenterteilung: **30.03.2016**
(21) Anmeldenummer: 09778723.8
(22) Anmeldetag: 22.09.2009
(51) Int. Cl.: B60L 5/00, B60M 1/34, B60M 7/00, E01B 2/00, E01B 25/00

(54) **VERLEGUNG VON ELEKTRISCHEN LEITUNGEN ENTLANG EINEM FAHRWEG EINES FAHRZEUGES**
POSITIONING OF ELECTRICAL CONDUCTORS ALONG A VEHICLE ROUTE
PLACEMENT DE CONDUCTEURS ÉLECTRIQUES LE LONG D'UNE ROUTE DE VÉHICULE

(30) Priorität: 22.09.2008 DE 102008048822
(43) Veröffentlichungstag der Anmeldung: 29.06.2011
(73) Patentinhaber: Bombardier Primove GmbH, 10785 Berlin (DE)
(72) Erfinder: STRUVE, Carsten, 80638 München (DE); SADOWSKI, Dennis, Pittsburgh PA 15239 (US)
(74) Vertreter: Patentanwälte Bressel und Partner mbB
(86) Internationale Anmeldenummer: PCT/EP2009/006936
(87) Internationale Veröffentlichungsnummer: WO 2010/031596

(56) Entgegenhaltungen:
- EP-A- 0 289 868
- DE-A- 4 115 568
- DE-A1- 10 346 105
- DE-U1- 20 002 984

## Beschreibung

Die Erfindung betrifft die Verlegung von elektrischen Leitungen entlang dem Fahrweg eines Fahrzeuges. Bei dem Fahrzeug kann es sich z.B. um ein spurgebundenes Fahrzeug handeln, etwa ein Schienenfahrzeug. In dem Fall eines Schienenfahrzeuges sind Fahrschienen vorhanden, auf denen das Fahrzeug fährt.

Insbesondere spurgebundene Fahrzeuge, wie übliche Schienenfahrzeuge, Mono-Schienen-Fahrzeuge, Trolleybusse und Fahrzeuge; die durch andere Mittel auf einer Spur geführt werden, z.B. andere mechanische Mittel als Schienen, magnetische Mittel, elektronische Mittel und/oder optische Mittel, erfordern elektrische Energie für ihren Antrieb auf der Spur und zum Betreiben von Hilfsbetrieben, die keinen Vortrieb des Fahrzeugs erzeugen. Solche Hilfsbetriebe sind z.B. Beleuchtungssysteme, Heizungs- und/oder Klimatisierungssysteme, die Luftzufuhr und Passagier-Informationssysteme. Allgemein gesprochen betrifft die Erfindung die Übertragung elektrischer Energie zu dem Fahrzeug, wobei das Fahrzeug nicht zwingend (aber bevorzugt) ein spurgebundenes Fahrzeug ist. Allgemein gesprochen kann das Fahrzeug z.B. ein Fahrzeug sein, das einen elektrisch betriebenen Antriebsmotor hat. Das Fahrzeug kann aber auch ein Fahrzeug sein, das ein Hybrid-Antriebssystem hat, z.B. ein System, das mit elektrischer Energie betrieben werden kann oder mit anderer Energie, z.B. elektrochemisch gespeicherter Energie oder Brennstoff (z.B. Erdgas, Diesel oder Benzin).

Spurgebundene Fahrzeuge, insbesondere Fahrzeuge für den öffentlichen Personentransport, weisen üblicherweise ein Kontaktelement für das mechanische und elektrische Kontaktieren einer Leitung entlang der Spur auf. Z.B. kann die Leitung eine Stromschiene oder eine Oberleitung sein. Zumindest ein Antriebsmotor, der sich an Bord des Fahrzeugs befindet, wird mit elektrischer Leistung von der externen Spur oder Leitung versorgt und erzeugt mechanische Antriebsenergie.

Straßenbahnen und andere lokale oder regionale Züge werden innerhalb von Städten üblicherweise über Oberleitungen betrieben. Insbesondere in historischen Teilen der Städte sind Oberleitungen jedoch unerwünscht. Andererseits sind mit Stromschienen im Boden oder nahe dem Boden Sicherheitsprobleme verbunden.

WO 95/30556 A2 beschreibt ein System, bei dem elektrische Fahrzeuge von dem Fahrweg mit Leistung versorgt werden. Das rein elektrische Fahrzeug hat ein oder mehrere an Bord befindliche Energiespeicherelemente oder -einrichtungen, die schnell mit Energie geladen oder versorgt werden können, die aus einem elektrischen Strom gewonnen wird, z.B. ein Netz aus elektromechanischen Batterien. Die Energiespeicherelemente können geladen werden, während das Fahrzeug betrieben wird. Das Laden erfolgt durch ein Netz von Leistungs-Kopplungselementen, z.B. Spulen, die in den Fahrweg integriert sind. Induktionsspulen sind an Passagier-Haltestellen angeordnet, um die Sicherheit für die Passagiere zu erhöhen.

Das Anordnen der Spulen an bestimmten Orten entlang der Länge des Fahrweges bringt den Nachteil mit sich, dass die an Bord des Fahrzeugs befindlichen Energiespeicher eine große Speicherkapazität benötigen. Außerdem kann die für den Antrieb oder andere Zwecke benötigte Energie ausgehen, wenn das Fahrzeug die nächste Spule nicht rechtzeitig erreicht. Daher ist es zumindest für einige Anwendungen vorzuziehen, dem Fahrzeug Energie kontinuierlich entlang dem Fahrweg, d.h. entlang der Spur, zuzuführen.

Die induktive Energieübertragung von der Spur zu dem Fahrzeug, d.h. das Erzeugen elektromagnetischer Felder, insbesondere Wechselfelder, unterliegt hinsichtlich der elektromagnetischen Verträglichkeit (EMV) Einschränkungen. Einerseits können elektromagnetische Felder andere technische Einrichtungen stören. Andererseits sollten Menschen und Tiere nicht permanent elektromagnetischen Feldern ausgesetzt werden. Zumindest müssen die jeweiligen Grenzwerte der Feldstärke eingehalten werden.

DE 200 029 84 U1 offenbart in Längsrichtung hintereinander verlegbare Schienenabschnittskörper mit zwei parallelen Längskanälen. In die Längskanäle, also in Fahrtrichtung des Fahrzeugs verlaufende Kanäle, sind stromführende Litzen eingebracht.

DE 103 46 105 A1 betrifft ein Verfahren zum Aufbau einer Fahrstrecke für ein durch einen elektrischen Linearmotor antreibbares Magnetschwebefahrzeug.

DE 41 15 568 A1 offenbart ein Automobil mit einem elektromotorischen Antriebs- und Bremssystem sowie integrierter Energierückgewinnung. Energie wird dem Automobil von einer fahrzeugexternen Energiequelle (Kraftwerk) zugeführt, und zwar prinzipiell über geeignete Stromleitungen oder andere geeignete technische Methoden. Insbesondere findet eine Stromzufuhr durch elektromagnetische Induktion aus fahrbaren Stromleitungen statt. Eine Ausgestaltung einer Induktivspule unter dem Fahrzeug ist konstruktiv abhängig von der Ausgestaltung der in der Fahrbahn verlegten Stromzuleitung. Die Stromleitung kann in Schlangenlinien quer zur Automobil-Fahrtrichtung verlegt werden.

EP 0 289 868 A2 beschreibt ein modulares elektrisches Fahrstreckensystem um Leistung induktiv zu darauf fahrenden Fahrzeugen zu übertragen.

Es ist eine Aufgabe der vorliegenden Erfindung, eine Anordnung sowie ein Verfahren zum Herstellen der Anordnung anzugeben, die die Übertragung von elektrischer Energie zu einem Fahrzeug, insbesondere zu einem spurgebundenen Fahrzeug, für die kontinuierliche Übertragung von elektrischer Energie während der Fahrt ermöglichen und die Einhaltung der jeweiligen Grenzwerte hinsichtlich der EMV erleichtern.

Gemäß einem Grundgedanken der vorliegenden Erfindung wird die Energie von einer Anordnung elektrischer Leiter, die entlang der Spur angeordnet ist, zu dem Fahrzeug übertragen, während das Fahrzeug auf der Spur fährt. Dabei besteht kein elektrischer Kontakt zwischen dem Fahrzeug und der Anordnung von Leitern. Die Anordnung von Leitern führt einen Wechselstrom, der ein entsprechendes elektromagnetisches Wechselfeld erzeugt, und das elektromagnetische Feld wird dazu genutzt, die elektrische Energie zu dem Fahrzeug zu übertragen.

Die Anordnung von elektrischen Leitern entlang der Spur kann auf verschiedene Weise realisiert werden. Z.B. können die Leiter bzw. Leitungen Kabel sein, die wie im Straßenbau oder Tiefbau üblich im Boden verlegt werden. Anschließend kann die Bodenöffnung verfüllt und mit einem geeigneten Belag versehen werden, auf dem das Fahrzeug fahren kann. Z.B. im Fall von Schienenwegen kann zunächst die Leiteranordnung verlegt werden und dann darüber das Gleisbett für die Schienen hergestellt werden.

Ein zu großer Abstand zwischen der Leiteranordnung und dem Fahrzeug hat jedoch den Nachteil, dass die Energie mit geringerem Wirkungsgrad übertragen wird. Je näher die Leiteranordnung an einem entsprechenden Empfänger an oder in dem Fahrzeug ist, desto besser ist die induktive Kopplung. Daher wird ein Formstein vorgeschlagen, mit dessen Hilfe eine oder mehrere elektrische Leitungen entlang dem Fahrweg des Fahrzeugs positioniert und/oder gehalten werden können. Der Formstein weist eine Mehrzahl von Aussparungen und/oder Vorsprüngen auf, wobei Ränder der Aussparungen und/oder die Vorsprünge jeweils einen Raum für die Leitungsabschnitte begrenzen, in den einer der Leitungsabschnitte einbringbar ist, so dass der Leitungsabschnitt sich in einer Längsrichtung des Raumes durch den Raum erstreckt. Anders ausgedrückt ist durch die Formgestaltung des Formsteins eine Mehrzahl von Räumen definiert, die eine Längsrichtung aufweisen, wobei in jeden der Räume ein sich in der Längsrichtung erstreckender Leitungsabschnitt einbringbar ist.

Somit ist durch die Formgebung des Formsteins vorgegeben, wie zumindest Leitungsabschnitte verlegt werden. Eine Mehrzahl der Formsteine kann daher in Serienfertigung hergestellt werden und von einer Bau-Fachfirma entlang dem Fahrweg angeordnet werden. Anschließend kann die elektrische Leitung in der durch die Formsteine vorgegebenen Weise, z.B. wieder von der Bau-Fachfirma, verlegt werden. Fehler hinsichtlich der Positionierung der Leitungsabschnitte können daher auf einfache Weise vermieden werden.

Der Formstein hat jedoch, je nach dem Material, aus dem er besteht, weitere mögliche Funktionen. Insbesondere kann der Formstein aus einem Material gefertigt sein, das das Fahrzeug tragen kann, so dass das Fahrzeug den in den Fahrweg integrierten Formstein befahren kann. Als geeignetes Material für diesen Zweck kommt z.B. Beton in Frage.

Der Formstein besteht aus elektrisch isolierendem Material, so dass er eine Schutzfunktion gegen Kurzschluss und unbeabsichtigte Kontaktierung durch Gegenstände und Personen erfüllt. Wiederum kommt Beton als geeignetes Material in Frage, jedoch auch Kunststoffe mit elektrisch isolierenden Eigenschaften. Beispielsweise ist es aus dem Bau von Schienenwegen bekannt, zum Zweck der Schalldämpfung Bauelemente zwischen den Schienen, und zwar oberhalb der Verankerung der Schienen, anzuordnen. Diese Bauelemente können durch entsprechende Formgestaltung als erfindungsgemäße Formsteine hergestellt werden.

Unter einem Formstein wird daher nicht ausschließlich ein Bauelement aus festem, im Wesentlichen inkompressiblem Material verstanden. Vielmehr kann der Formstein auch aus elastisch verformbarem Material bestehen. Auch kann der Formstein miteinander verbundene Bereiche aufweisen, die aus verschiedenen Materialien gefertigt sind. Wenn Beton für den Formstein verwendet wird, so ist der Beton vorzugsweise frei von Armierung aus Metall. Vielmehr wird Beton anderer Art, z.B. mit Faserbestandteilen (etwa Glasfaser) bevorzugt. Auch Polymerbeton kommt in Frage. Das Fehlen einer Armierung aus Metall verhindert, dass unbeabsichtigte Wechselwirkungen mit der Leiteranordnung entstehen oder dass die Armierung sogar das von der Leiteranordnung erzeugte elektromagnetische Wechselfeld gegen den Bereich abschirmt, den ein induktiver Aufnehmer des Fahrzeugs durchquert, wenn das Fahrzeug entlang der Strecke fährt. Es ist jedoch auch möglich, dass der Formstein in bestimmten, vorgegebenen Bereichen elektrisch leitendes Material aufweist, um in diesen Bereichen eine Abschirmung der Umwelt gegen die von der Leiteranordnung erzeugten elektromagnetischen Wechselfelder zu erreichen. Z.B. kann ein Formstein, der unterhalb der Fahrstrecke im Boden oder auf dem Boden angeordnet werden soll, in seinem unteren Bereich eine solche Abschirmung aufweisen. Dabei befinden sich die Räume für die Verlegung der elektrischen Leitung oder Leitungen oberhalb der Abschirmung. Alternativ oder zusätzlich kann auch seitlich der Räume für die Verlegung der elektrischen Leitungen eine solche Abschirmung in den Formstein integriert sein.

Vorzugsweise wird der Formstein gegossen, wie es an sich z.B. bei der Herstellung von Beton-Fertigteilen oder Kunststoffelementen für Bauzwecke bekannt ist. Die Räume zur Aufnahme der Leitungsabschnitte können durch den Gießvorgang entstehen und/oder nachträglich in den Formstein eingebracht werden. Die Räume, die durch den Formstein gebildet werden, befinden sich vorzugsweise an der Oberfläche des Formsteins. Grundsätzlich umfasst die Erfindung jedoch auch den Fall, dass der Formstein zumindest einen Raum aufweist, der einen geschlossen umlaufenden Rand, mit Ausnahme einer Eintrittsöffnung und einer Austrittsöffnung, aufweist, durch die hindurch die elektrische Leitung geführt wird, um den Leitungsabschnitt in dem Raum zu positionieren. Die Bauweise mit den an der Oberfläche ausgeformten Räumen zur Aufnahme der Leitungsabschnitte wird jedoch deshalb bevorzugt, da die Verlegung der elektrischen Leitung oder Leitungen einfacher ist und es auch möglich ist, die Leitung oder den Formstein zu einem späteren Zeitpunkt auszuwechseln.

Die an dem Formstein ausgeformten Räume zur Aufnahme der Leitungsabschnitte dienen der Positionierung und/oder dem Halten der Leitungsabschnitte. Insbesondere wenn die Abmessungen der Räume bei geringem Spiel auf die Abmessungen der zu verlegenden Leitung abgestimmt sind, wird der Leitungsabschnitt genau durch die Formgebung des Formsteins positioniert. Die Ränder der Aussparung und/oder die an dem Formstein ausgeformten Vorsprünge dienen dem Halten der Leitungsabschnitte, wenn und soweit die verlegte elektrische Leitung an den Rändern oder den Vorsprüngen anliegt. Zumindest wird bei einem solchen mechanischen Kontakt eine Bewegung der elektrischen Leitung und damit eine Veränderung der vorgegebenen Verlegung der Leitung erschwert oder verhindert.

Gemäß einem weiteren Merkmal des Formsteins erstrecken sich die Längsrichtungen der durch die Ränder der Aussparungen und/oder durch die Vorsprünge begrenzten Räume im Wesentlichen parallel zueinander in einer gemeinsamen Ebene. Abweichungen von einer exakt parallel zueinander ausgerichteten Anordnung der Räume sind insbesondere dann möglich, wenn der Formstein an einer Kurve des Fahrweges des Fahrzeugs verlegt werden soll. In diesem Fall können die Längsrichtungen einander benachbarter Räume entsprechend ihrem Abstand und entsprechend dem Kurvenradius des Fahrweges anders als parallel ausgerichtet sein. Bei einem in der Regel geringen Abstand der Räume voneinander (vorzugsweise mindestens 0,1 m und höchstens 1 m) und bei den üblicherweise sehr viel größeren Kurvenradien der Fahrwege von Fahrzeugen sind die Längsrichtungen dennoch annähernd parallel.

Zum Umfang der Erfindung gehört eine Anordnung mit dem Formstein in einer der in dieser Beschreibung beschriebenen Ausgestaltungen und ferner mit den Leitungsabschnitten, die sich durch die Räume erstrecken. Zumindest ein Teil der Leitungsabschnitte sind Abschnitte einer durchgehenden elektrischen Leitung, die beim Betrieb der elektrischen Leitung insbesondere keine Übergänge zu anderen Leitungen aufweist. Zur Anordnung gehört z. B. die gesamte elektrische Leitung. Da die Leitungsabschnitte in den Räumen im Wesentlichen parallel zueinander verlaufen, weist die elektrische Leitung außer den sich in Längsrichtung durch die Räume erstreckenden ersten Leitungsabschnitten auch andere, zweite Leitungsabschnitte auf, die die ersten Leitungsabschnitte verbinden. Bei einer besonders bevorzugten Ausgestaltung, auf die auch noch anhand der beigefügten Figuren näher eingegangen wird, befinden sich die zweiten Leitungsabschnitte alternierend an gegenüberliegenden Seiten des Formsteins, so dass die elektrische Leitung insgesamt einen serpentinenförmigen Weg durchläuft. Dabei erstrecken sich die ersten Leitungsabschnitte quer zur Fahrtrichtung des Fahrzeugs bzw. des Fahrweges und erstrecken sich die zweiten Leitungsabschnitte ungefähr in Fahrtrichtung.

Der Formstein kann optional auch durch seine Formgebung vordefinierte Räume zur Aufnahme der zweiten Leitungsabschnitte aufweisen. Es ist jedoch auch möglich, dass die zweiten Leitungsabschnitte auf einem anderen Gegenstand aufliegen oder frei an den ersten Leitungsabschnitten hängen, die sie miteinander verbinden.

Wenn in dieser Beschreibung davon die Rede ist, dass Leitungsabschnitte in die von dem Formstein ausgebildeten Räume eingebracht werden oder darin aufgenommen sind, dann schließt dies einerseits den Fall ein, dass die Leitungsabschnitte vollständig aufgenommen sind, so dass eine gedachte Hüllfläche mit ebenen oder annähernd ebenen Flächensegmenten, welche vorhandene Außenkonturen des Formsteins im Bereich der an der Oberfläche des Formsteins liegenden Räume verbinden, auch die in den Räumen aufgenommenen Leitungsabschnitte enthält. Es kann jedoch auch sein, dass die Querschnitte der Leitungsabschnitte in diesem Sinne nicht vollständig von den Räumen aufgenommen sind. Insbesondere in diesem Fall kann zusätzlich eine Abdeckung vorgesehen sein, die ebenfalls einen Raum zur Aufnahme der Leitungsabschnitte aufweist oder mehrere solche Räume aufweist. Eine solche Abdeckung kann insbesondere ein Deckel sein, der die sich durch die Räume erstreckenden Leitungsabschnitte abdeckt, insbesondere an der Oberseite des Formsteins.

Entlang dem Fahrweg des Fahrzeuges können hintereinander mehrere der Formsteine angeordnet sein, so dass sich die Längsrichtungen der durch die verschiedenen Formsteine gebildeten Räume zur Aufnahme der Leitungsabschnitte im Wesentlichen parallel zueinander erstrecken, wobei die Längsrichtungen quer zur Fahrtrichtung des Fahrzeugs verlaufen. Dabei können die benachbarten Formsteine, die unmittelbar hintereinander angeordnet sind, aneinander anstoßen oder Lücken aufweisen. Auf diese Weise kann über längere Abschnitte des Fahrweges hinweg durch die Formsteine vorgegeben werden, wie elektrische Leitungen zu verlegen sind.

Insbesondere kann es sich bei dem Fahrweg um einen Schienenweg für Schienenfahrzeuge handeln. In diesem Fall wird bevorzugt, dass sich die hintereinander angeordneten Formsteine zwischen den Fahrschienen des Schienenweges befinden, so dass die Längsrichtungen der Räume zur Aufnahme der Leitungsabschnitte in einer im Wesentlichen horizontalen Ebene und quer zur Fahrtrichtung des Fahrzeuges verlaufen. Unter im Wesentlichen horizontal wird hier verstanden, dass die Längsrichtungen nicht wesentlich anders geneigt sind als die etwaig vorhandene Quemeigung des Schienenweges, z.B. in einer Kurve des Schienenweges.

Der Schienenweg kann in jeder an sich bekannten Weise gestaltet sein, um die Schienen zu positionieren und zu halten. Z.B. können Schwellen, die sich quer zur Fahrtrichtung erstrecken, vorhanden sein, etwa Betonschwellen, an denen die in Fahrtrichtung verlaufenden Schienen befestigt sind. Wie ebenfalls an sich bekannt, können die Schienen jedoch auch an einer in Fahrtrichtung durchgehenden Betonplatte befestigt sein oder Zwischenräume zwischen Befestigungsstellen der Schienen können mit Beton oder einem anderen formstabilen Material ausgefüllt sein. Insbesondere im Bereich von Innenstädten können die Schienen jedoch auch in den Boden eingelassen sein, so dass lediglich die üblichen Aussparungen im Boden verbleiben, die für das Eingreifen der Räder des Schienenfahrzeugs erforderlich sind. In allen Fällen wird bevorzugt, dass die Räume zur Aufnahme der Leitungsabschnitte lediglich wenige Zentimeter unterhalb des Höhenniveaus der Oberkante der Schienen angeordnet sind. Insbesondere liegt die Unterkante der Räume zur Aufnahme der Leitungsabschnitte, die durch das Material des Formsteins oder der Formsteine definiert ist, lediglich maximal 10 cm, vorzugsweise lediglich maximal 5 cm unter dem Höhenniveau der Oberkante der Schienen. Auf diese Weise wird eine sehr gute induktive Kopplung zwischen der Leiteranordnung am Fahrweg einerseits und dem Aufnehmer an oder im Fahrzeug andererseits ermöglicht. Z.B. ist der Abstand zwischen der elektrischen Leitung oder den elektrischen Leitungen im Fahrweg einerseits und dem Aufnehmer des Fahrzeugs andererseits kleiner als 10 cm und vorzugsweise nicht größer als 7,5 cm, wenn der Aufnehmer sich an der Unterseite des Schienenfahrzeugs befindet.

Wenn der Schienenweg wie oben erwähnt Schwellen aufweist oder eine durchgehende Betonplatte, an der die Schienen befestigt sind, sind die Formsteine vorzugsweise auf die oberen Oberflächen der Schwellen bzw. der Betonplatte aufgelegt. Z.B. erstreckt sich in Fahrtrichtung jeweils ein Formstein etwa von der Mitte einer Schwelle bis zur Mitte der folgenden Schwelle, d.h. er überbrückt den Zwischenraum zwischen zwei Schwellen.

Nicht nur im Fall eines Schienenweges können die hintereinander in Fahrtrichtung angeordneten Formsteine zur Sicherung gegen ein unbeabsichtigtes Verrutschen oder Verschieben miteinander verbunden werden. Z.B. weisen die Formsteine im Bereich ihrer in Fahrtrichtung vorne und hinten liegenden Enden jeweils Mittel auf, über die Spannkräfte in den Formstein eingeleitet werden können. Z.B. ist an einer Oberfläche des Formsteins, die etwa in Fahrtrichtung und etwa in vertikaler Richtung verläuft, eine Aussparung vorgesehen, in die ein Spannelement eingesetzt werden kann, wobei das Spannelement ebenfalls in eine solche Aussparung an dem benachbarten Formstein eingesetzt wird und die beiden hintereinander angeordneten Formsteine miteinander verspannt, z.B. durch Anziehen einer Schraube oder Mutter. Alternativ oder zusätzlich können die im Folgenden zu beschreibenden Deckel in einer für die Formsteine beschriebenen Weise miteinander verbunden sein.

Wenn Deckel auf die entlang dem Fahrweg angeordneten Formsteine aufgelegt werden, dient dies insbesondere dem Schutz des Formsteins und der darin oder daran verlegten elektrischen Leitung(en) vor Einflüssen wie unbeabsichtigtes Betreten durch Personen, Beschädigung bei Bauarbeiten oder während der Verlegung der Leitungen und vor Witterung. Insbesondere soll verhindert werden, dass Wasser von oben in die Räume zur Aufnahme der Leitungsabschnitte gelangen kann und darin gefrieren kann. Daher sind die Deckel vorzugsweise breiter ausgeführt als die Räume zur Aufnahme der quer zur Fahrtrichtung verlaufenden Leitungsabschnitte. Die Deckel können daher seitlich über die Ränder der Formsteine überstehen, wodurch ein besonders wirksamer Schutz erzielt ist.

Alternativ oder zusätzlich können die Deckel nach unten vorspringende Ränder aufweisen. Diese Ränder können sich z.B. mindestens bis zu dem Höhenniveau der Unterkante der Räume zur Aufnahme der Leitungsabschnitte erstrecken und somit auch die in den Räumen verlegten elektrischen Leitungen oder Leitungsabschnitte gegen Einflüsse von der Seite schützen.

Wie oben beschrieben können hintereinander in Fahrtrichtung angeordnete Deckel miteinander verbunden werden. Dies dient außer der Erhöhung der mechanischen Stabilität und dem Schutz gegen Verrutschen auch dem Schutz vor einem Diebstahl der elektrischen Leitungen.

Die Formsteine und/oder die Deckel können sich in Fahrtrichtung erstreckende Vorsprünge und Ausnehmungen aufweisen, so dass jeweils zumindest ein Vorsprung eines Formsteins oder Deckels in eine entsprechend geformte Ausnehmung des benachbarten Formsteins oder Deckels eingreift. Auf diese Weise ist eine korrekte Anordnung der Formsteine oder der Deckel relativ zueinander gesichert.

Alternativ oder zusätzlich können auch Formsteine einerseits und die darüber anzuordnenden Deckel andererseits solche Vorsprünge oder Ausnehmungen aufweisen. Z.B. weist ein Formstein zwei Ausnehmungen auf, die an verschiedenen Stellen an seiner Oberseite ausgebildet sind, und weist der darauf anzuordnende Deckel zwei Vorsprünge im entsprechenden Abstand auf, so dass er nur in der somit vorgegebenen Weise auf den Formstein aufgelegt werden kann. Dadurch kann z.B. gewährleistet werden, dass der seitliche Überstand der Ränder des Deckels auf beiden Seiten des Formsteins gleich groß ist.

Der erfindungsgemäße Deckel kann an seiner Oberseite visuell erkennbare Informationen aufweisen und/oder anzeigen. Z.B. ist es möglich, durch entsprechende Farbgestaltung der Oberfläche an der Oberseite des Deckels anzuzeigen, dass sich unter dem Deckel eine elektrische Leitung befindet. Alternativ oder zusätzlich kann z.B. durch eine linienartige oder streifenartige, in Fahrtrichtung verlaufende Farbgestaltung dargestellt werden, in welcher Richtung sich der Fahrweg erstreckt. Ist eine solche Gestaltung an aufeinanderfolgenden Deckeln realisiert, kann sich der Fahrer eines Fahrzeugs, das nicht spurgebunden ist oder das jedenfalls innerhalb gewisser Toleranzgrenzen und/oder unter bestimmten Umständen vom Fahrweg abweichen kann, orientieren, wo Energie von einem Aufnehmer des Fahrzeugs aufgenommen werden kann. Z.B. kann sich der Fahrer eines Trolleybusses daran orientieren und den Bus möglichst so lenken, dass sich die Deckel zwischen den rechten und linken Rädern des Busses befinden.

In die Deckel kann alternativ oder zusätzlich zumindest eine Leuchte integriert sein oder daran befestigt sein, wobei die Leuchte es anzeigt, wenn eine darunter angeordnete elektrische Leitung von elektrischem Strom durchflossen wird. Es ist daher möglich, anhand des Leuchtens der Leuchte zu erkennen, dass die darunter liegende Leiteranordnung ein elektromagnetisches Wechselfeld erzeugt, welches die Energieübertragung zu dem Fahrzeug ermöglicht. Wenn viele solcher Leuchten entlang dem Fahrweg verteilt sind, kann sich der Fahrer auch daran orientieren, um das Fahrzeug entsprechend zu lenken.

Derartige Leuchten an oder in einem Deckel können jedoch auch andere Informationen anzeigen. Z.B. kann durch das Aufleuchten einer Leuchte, z.B. einer roten Leuchte, angezeigt werden, dass eine Störung des Betriebes der Leiteranordnung in der Strecke besteht.

Zusammenfassend kann durch visuell wahrnehmbare Informationen daher dargestellt werden, wo die elektrische Leitung oder wo die elektrischen Leitungen unterhalb der Oberfläche verlegt ist/sind, ob die Leiteranordnung stromdurchflossen ist oder nicht und/oder ob andere vordefinierte Betriebszustände (z.B. Störung) vorliegen.

Im Fall einer Leuchte, die anzeigen soll, dass die darunter angeordnete Leiteranordnung ein elektromagnetisches Feld erzeugt, ist die Leuchte vorzugsweise mit einer Induktivität (z.B. einer Spule) verbunden, so dass das elektromagnetische Wechselfeld in der Induktivität eine elektrische Spannung induziert und diese elektrische Spannung die Leuchte zum Aufleuchten bringt.

Ferner kann der Deckel eine Detektionseinrichtung zum Detektieren eines Fahrzeuges aufweisen. Dabei kann die Detektionseinrichtung ausgestaltet sein, lediglich die Anwesenheit irgendeines Fahrzeuges zu detektieren. Alternativ kann sie ausgestaltet sein, die Anwesenheit eines bestimmten Fahrzeugs oder eines bestimmten Fahrzeugstyps zu detektieren. Z.B. kann die Einrichtung ein codiertes Signal empfangen, wobei der Code die Information darüber enthält, welches Fahrzeug oder welcher Fahrzeugtyp das Signal ausgesendet hat. Erreicht ein Fahrzeug daher den Bereich in der Umgebung der Detektionseinrichtung, die für eine Übertragung des Signals zu der Detektionseinrichtung ausreicht (z.B. ein Bereich von 10 oder 20 m Abstand um die Detektionseinrichtung), detektiert die Detektionseinrichtung die Anwesenheit des Fahrzeugs und gibt ein entsprechendes Signal aus. Dieses ausgegebene Signal, das vorzugsweise über eine elektrische Leitung ausgegeben wird, kann lediglich der Streckenüberwachung dienen und in diesem Fall z.B. an eine Leitstelle übertragen werden. Das Signal kann aber auch dazu benutzt werden, einen in Fahrtrichtung vor dem Fahrzeug liegenden Streckenabschnitt einzuschalten, d.h. die in dem Streckenabschnitt verlegten elektrischen Leitungen oder Leitungsabschnitte zu bestromen, so dass das elektromagnetische Wechselfeld von der Leiteranordnung erzeugt wird. Auf diese Weise können die Leiteranordnungen lediglich bei Bedarf, wenn ein Fahrzeug kurz davor ist, einen Streckenabschnitt zu befahren, eingeschaltet werden.

Für den Empfang des von dem Fahrzeug ausgesendeten Signals wird vorzugsweise ein induktiver Empfänger verwendet, der nicht nur das Signal selbst empfängt, sondern auch durch die in der Induktivität induzierte elektrische Spannung den für den Betrieb der Detektionseinrichtung benötigten elektrischen Strom liefert. Z.B. kann hierzu ein so genanntes RFID (Radio Frequency Identification Device) verwendet werden.

Das Signal der Detektionseinrichtung kann alternativ oder zusätzlich auch dafür genutzt werden, dass die Kosten für die Nutzung der Energieübertragung zu dem Fahrzeug abgerechnet werden. Der jeweilige Betreiber des Fahrzeugs oder das jeweilige Fahrzeug selbst werden in diesem Falle durch die Detektionseinrichtung erkannt und die Kosten werden dem Betreiber oder dem Fahrzeug zugeordnet. Z.B. kann die Detektionseinrichtung einen in Fahrtrichtung vor dem Fahrzeug liegenden Streckenabschnitt lediglich erst dann einschalten, wenn ein Fahrzeug oder Betreiber erkannt wurde und somit die Kosten abgerechnet werden können.

Die Detektionseinrichtung kann auch dazu genutzt werden, ein Notsignal zu empfangen und bei Empfang des Notsignals die Leiteranordnung in der gesamten Strecke oder in einem oder in mehreren bestimmten Streckenabschnitten auszuschalten. Dies kann z.B. dann erforderlich sein, wenn entdeckt wurde, dass ein Deckel entfernt ist und daher Personen und/oder die Leiteranordnung gefährdet sind.

Ferner betrifft die Erfindung ein Verfahren zum Positionieren und/oder Halten einer Mehrzahl von Leitungsabschnitten einer oder mehrerer elektrischer Leitungen entlang einem Fahrweg eines Fahrzeuges, wobei
- zumindest ein Formstein bereitgestellt wird, der eine Mehrzahl von Aussparungen und/oder Vorsprünge aufweist, wobei Ränder der Aussparungen und/oder die Vorsprünge für die Leitungsabschnitte jeweils einen Raum begrenzen, in den einer der Leitungsabschnitte einbringbar ist, so dass er sich in einer Längsrichtung des Raumes durch den Raum erstreckt, und wobei sich die Längsrichtungen der durch die Ränder der Aussparungen und/oder durch die Vorsprünge begrenzten Räume im Wesentlichen parallel zueinander in einer gemeinsamen Ebene erstrecken,
- zumindest eine elektrische Leitung derart in die Räume eingebracht wird, dass Leitungsabschnitte der Leitung sich in der Längsrichtung durch die Räume erstrecken.

Die Leitung oder die Leitungen wird/werden derart in die Räume eingebracht, dass zumindest ein Teil der Leitungsabschnitte von einer durchgehenden elektrischen Leitung gebildet wird, so dass die sich in Längsrichtung durch die Räume erstreckenden, ersten Leitungsabschnitte über andere, zweite Leitungsabschnitte der elektrischen Leitung miteinander verbunden sind, wobei sich die zweiten Leitungsabschnitte alternierend an gegenüberliegenden Seiten des Formsteins erstrecken, so dass die elektrische Leitung einen serpentinenförmigen Weg durchläuft.

Weiterbildungen und andere Ausgestaltungen des Verfahrens ergeben sich aus der Beschreibung der erfindungsgemäßen Anordnung, d.h. die Beschreibung eines Merkmals der Anordnung bedeutet, dass die Anordnung in entsprechender Weise hergestellt werden kann.

An die Leiteranordnung, die mit Hilfe der erfindungsgemäßen Formsteine entlang dem Fahrweg des Fahrzeugs verlegt wird, kann eine Wechselspannung beliebiger Frequenz angelegt werden. Es wird jedoch bevorzugt, dass die Frequenz größter als 100 Hz ist. Ein gut geeigneter Frequenzbereich ist der Bereich zwischen 1 und 100 kHz, z.B. 10 bis 30 kHz.

Wie grundsätzlich in WO 95/30556 A2 offenbart ist, kann das auf der Fahrspur fahrende Fahrzeug zumindest eine Spule aufweisen. Das von der an die Leiteranordnung angelegten elektrischen Wechselspannung erzeugte elektromagnetische Wechselfeld erzeugt eine Wechselspannung in der Spule, die dazu genutzt werden kann, eine beliebige elektrische Last in dem Fahrzeug, z.B. einen Antriebsmotor, zu betreiben. Alternativ oder zusätzlich kann die Wechselspannung dazu genutzt werden, ein Energiespeichersystem, z.B. konventionelle Batterien und/oder Superkondensatoren (Super Caps) zu laden. Ein System zum Übertragen von elektrischer Energie zu einem Fahrzeug, insbesondere zu einem spurgebundenen Fahrzeug, etwa einem leichten Schienenfahrzeug (wie z.B. eine Straßenbahn) kann daher z.B. folgende Merkmale aufweisen:
- das System weist eine elektrische Leiteranordnung zum Erzeugen eines elektromagnetischen Wechselfeldes auf, um dadurch Energie zu dem Fahrzeug zu übertragen,
- die elektrische Leiteranordnung weist zumindest eine Leitung zum Führen einer Phase eines Wechselstroms auf,
- die Leitung erstreckt sich entlang der Spur bzw. entlang dem Fahrweg des Fahrzeugs,
- die Leitung ist so ausgestaltet, dass sie - an jedem Zeitpunkt, an dem ein elektrischer Wechselstrom durch die Leitung fließt - eine Reihe von aufeinanderfolgenden magnetischen Polen eines elektromagnetischen Feldes erzeugt, wobei die aufeinanderfolgenden magnetischen Pole alternierende magnetische Polaritäten haben,
- die Reihe der aufeinanderfolgenden magnetischen Pole erstreckt sich in der Fahrrichtung des Fahrzeugs, die durch die Spur definiert ist.

Alternativ oder zusätzlich kann das System durch folgende Merkmale definiert werden:
- das System weist eine elektrische Leiteranordnung auf,
- die elektrische Leiteranordnung weist zumindest eine Leitung zum Führen einer Phase eines Wechselstroms auf,
- die Leitung erstreckt sich entlang der Spur, d.h. dem Fahrweg des Schienenfahrzeugs,
- die Leitung weist eine Mehrzahl von Abschnitten (im Folgenden "Bereiche" genannt) auf, die sich quer zu der Fahrrichtung des Fahrzeugs, die durch die Spur definiert ist, erstrecken,
- die Abschnitte derselben elektrischen Leitung sind in einer Reihe entlang der Spur angeordnet, so dass - zu jedem Zeitpunkt, zu dem ein elektrischer Wechselstrom durch die Leitung fließt - der Wechselstrom durch in der Reihe aufeinander folgende Abschnitte alternierend in entgegengesetzte Richtungen fließt.

Ein entsprechendes Verfahren zum Übertragen von Energie zu einem Fahrzeug weist die folgenden Merkmale auf:
- ein elektromagnetisches Wechselfeld wird durch eine entlang der Spur angeordnete Leiteranordnung erzeugt und dadurch wird Energie zu dem Fahrzeug übertragen,
- das elektromagnetische Feld wird dadurch erzeugt, dass zumindest der Phasenstrom einer Phase eines Wechselstroms in einer Leitung der Leiteranordnung fließt,
- der Phasenstrom wird in der Weise in der Leitung entlang der Spur geführt, dass - zu jedem Zeitpunkt, zu dem der Phasenstrom durch die Leitung fließt - er quer zu der Fahrrichtung des Fahrzeugs durch eine Mehrzahl von Abschnitten der Leitung fließt, wobei er durch eine erste Gruppe von Abschnitten in einer ersten Richtung fließt und durch eine zweite Gruppe von Abschnitten in der entgegengesetzten Richtung fließt und wobei die Abschnitte der ersten Gruppe und der zweiten Gruppe in der Fahrrichtung alternieren, d.h. in Fahrrichtung auf einen Abschnitt der ersten Gruppe ein Abschnitt der zweiten Gruppe folgt usw.

Wie oben erwähnt kann die elektrische Leiteranordnung zumindest eine der oben erwähnten Leitungen aufweisen. Gemäß den beigefügten Patenansprüchen weist sie jedoch zumindest zwei solcher Leitungen auf, wobei jede Leitung ausgestaltet ist bzw. so betrieben wird, dass sie eine Phase eines Mehrphasen-Wechselstroms führt. In der Praxis wird es bevorzugt, dass die elektrische Leiteranordnung drei Leitungen aufweist und dass jede Leitung ausgestaltet ist, eine der drei Phasen eines Dreiphasen-Wechselstromes zuführen. Es ist jedoch auch möglich, dass der Wechselstrom mehr als drei Phasen hat, so dass eine entsprechende Anzahl von elektrischen Leitungen als Teil der Leiteranordnung vorhanden ist. Die magnetischen Pole, die durch die Leitungen erzeugt werden bzw. durch die Abschnitte der verschiedenen Leitungen erzeugt werden, bilden in Fahrtrichtung - zu jedem Zeitpunkt - eine sich wiederholende Folge, wobei die sich wiederholende Folge der Folge der Phasen entspricht. Z.B. folgt im Fall eines Dreiphasen-Wechselstroms, der die Phasen U, V, W hat, auf einen Abschnitt, der die Phase U führt, ein Abschnitt, der die Phase V führt, und auf diesen Abschnitt folgt ein Abschnitt, der die Phase W führt. Diese Folge von Phasen U, V, W wiederholt sich in der Fahrtrichtung viele Male. Ein konkretes Beispiel wird noch in der Figurenbeschreibung beschrieben.

Die zumindest eine Leitung erzeugt, wie erwähnt, eine Reihe von aufeinanderfolgenden magnetischen Polen eines elektromagnetischen Wechselfeldes, wobei die aufeinanderfolgenden Pole alternierende magnetische Polaritäten haben. Anders ausgedrückt: zu einem gegebenen Zeitpunkt erzeugt der Wechselstrom in der Leitung (betrachtet in der Fahrtrichtung) ein magnetisches Feld, das einen magnetischen Feldvektor hat, der in einem ersten Abschnitt der Leitung in eine erste Richtung orientiert ist (z.B. so, dass der Nordpol oben liegt und der Südpol unten liegt). Auf diesen Abschnitt folgt in der Fahrtrichtung ein zweiter Abschnitt der Leitung, wo der magnetische Feldvektor in der umgekehrten Richtung orientiert ist. Da die Leiteranordnung mehr als eine Phase aufweist, wird eine sich in der Fahrtrichtung oder entgegen der Fahrtrichtung bewegende magnetische Feldwelle erzeugt. Dies bedeutet, dass sich die Bereiche mit den maximalen magnetischen Feldstärken in Fahrtrichtung bewegen oder entgegen der Fahrtrichtung bewegen und daher lediglich zu bestimmten Zeitpunkten exakt bei den quer zur Fahrtrichtung verlaufenden Abschnitten der Leitungen liegen. Bei einer Mehrphasen-Leiteranordnung liefern die Leitungsabschnitte aller Phasen einen Beitrag zum insgesamt erzeugten Magnetfeld. Es wird zwar bevorzugt, dass die Abschnitte aller Leitungen der Leiteranordnung, die sich quer zur Fahrtrichtung erstrecken, in einer regelmäßigen, sich wiederholenden Folge hintereinander angeordnet sind. In der Praxis können davon jedoch leichte Abweichungen entstehen, auch wenn die erfindungsgemäßen Formsteine für die Verlegung der Leitungen genutzt werden. Z.B. in Kurvenbereichen entstehen solche Abweichungen. Andere Gründe für mögliche Abweichungen von dem Idealfall einer konstanten, sich in Fahrtrichtung ausbreitenden magnetischen Welle sind äußere elektromagnetische Felder, der Einfluss der sich in Fahrtrichtung erstreckenden zweiten Leitungsabschnitte und etwaige Anschlussleitungen, über die die Phasenleitungen mit einer Versorgungsleitung oder einer Energiequelle verbunden sind. Äußere elektromagnetische Felder werden z.B. von dem Fahrzeug erzeugt, das auf der Fahrspur fährt.

Die hintereinander in Fahrtrichtung angeordneten quer zur Fahrtrichtung verlaufenden Abschnitte der Leiteranordnung haben den Vorteil, dass die resultierenden elektromagnetischen Felder seitlich der Leiteranordnung (in Richtung der Längserstreckung der quer zur Fahrtrichtung verlaufenden Leitungsabschnitte) bereits in sehr geringem Abstand zu der Leiteranordnung einander kompensieren. In anderen Worten löschen sich die entgegengesetzt orientierten magnetischen Feldstärken (sowie die entsprechenden elektrischen Feldstärken) in diesen Bereichen durch Überlagerung größtenteils aus. Dadurch können Grenzwerte für das Problem der EMV leicht eingehalten werden, obwohl große elektrische Leistungen induktiv von der Leiteranordnung zu dem Fahrzeug übertragen werden können. Auch aus diesem Grund ist es von Vorteil, wenn sich die quer zur Fahrtrichtung erstreckenden Leitungsabschnitte in etwa einer horizontalen Ebene erstrecken. Eine leichte Neigung der Leitungsabschnitte gegenüber der Horizontalen, z.B. in Kurvenbereichen der Strecke, führt aber nicht zu nennenswert größeren Feldstärken seitlich der Strecke. Dasselbe gilt, wenn die Strecke z.B. in hügeligem Gelände ansteigt oder abfällt.

Wie bereits erwähnt, erstreckt sich die zumindest eine Leitung der elektrischen Leiteranordnung in der Art von Serpentinen entlang der Spur bzw. Fahrstrecke, d.h. Abschnitte der Leitung, die sich in Fahrtrichtung erstrecken, werden im Verlauf der Leitung von Abschnitten gefolgt, die sich quer zur Fahrtrichtung erstrecken usw. Im Fall eines Mehrphasensystems mit zumindest zwei elektrischen Leitungen trifft dies auf alle elektrischen Leitungen zu.

Die Leitung oder Leitungen können durch außen elektrisch isolierte Kabel, z.B. Litzenkabel, realisiert werden. Die Querschnittsfläche des elektrisch leitenden Teils des Kabels liegt z.B. im Bereich von 80 bis 200 mm², je nach den von dem Kabel zu führenden Stromstärken. Je nach Leistung oder Stromstärke können jedoch auch andere Querschnitte gewählt werden. Auch ist es möglich, zwei oder mehrere Kabel parallel, unmittelbar nebeneinander zu verlegen, um dieselbe Phase des Wechselstroms zu führen.

Der oben verwendete Begriff "serpentinenartig" deckt sowohl eine Leitungsverlegung mit kurvenförmigen Übergängen zwischen geraden Leitungsabschnitten als auch Konfigurationen mit scharfen, kantenartigen Übergangsbereichen zwischen benachbarten geraden Abschnitten ab. Möglichst lange gerade Abschnitte werden bevorzugt, da sie homogenere Felder erzeugen.

Die bei der Verwendung von zumindest zwei Phasen und entsprechenden Leitungen erzeuge magnetische Welle, die sich in Fahrtrichtung oder entgegen der Fahrtrichtung ausbreitet, hat eine Geschwindigkeit, die proportional zu dem Abstand von aufeinanderfolgenden magnetischen Polen ist und proportional zu der Frequenz des Wechselstroms ist, der durch die Leiteranordnung fließt. Vorzugsweise ist die Breite der Leitungsabschnitte, die sich quer zur Fahrtrichtung erstrecken, größer als die Breite eines Empfängers an oder in dem Fahrzeug, wobei die Breite des Empfängers durch die Breite der Wicklung oder Spule definiert ist, in der das elektromagnetische Wechselfeld die elektrische Wechselspannung induziert. Diese Breite ist gleich der Länge der durch den erfindungsgemäßen Formstein gebildeten Räume, wenn jeweils in Längsrichtung der Räume am Ende der Räume der Übergang in Leitungsabschnitte stattfindet, die sich in Fahrtrichtung erstrecken und verschiedene quer zur Fahrtrichtung verlaufende Leitungsabschnitte verbinden. Diese Breite kann sogar größer gewählt werden als die Breite des Fahrzeugs, das mit elektrischer Energie versorgt werden soll. In der Regel reicht jedoch eine Breite aus, die etwa die Hälfte der Breite des Fahrzeugs oder die Hälfte des Abstandes zweier Fahrschienen beträgt, im Fall von Schienenfahrzeugen z.B. eine Breite von 50 cm.

Für manche Anwendungen kann es erwünscht sein, dass die magnetische Wechselfeldstärke des von der Leiteranordnung erzeugten Feldes über die Zeit konstant bleibt, unabhängig davon, wie groß die zu einem oder mehreren Fahrzeugen auf der Strecke übertragene elektrische Leistung ist. Um dies zu erreichen, kann die Leitung oder können die Leitungen der Leiteranordnung von einer Konstantstromquelle versorgt werden, die die Leitungen oder die Leitung mit einem Wechselstrom versorgt, dessen Mittelwert oder dessen Amplitude konstant ist. Z.B. kann die Konstantstromquelle eine Anordnung aufweisen, die eine konstante Wechselspannung in einen konstanten Wechselstrom transformiert. Dabei kann z.B. jede Leitung eine Eingangsinduktivität an einer Eingangsseite der Konstantstromquelle und eine Ausgangsinduktivität an einer Ausgangsseite der Konstantstromquelle aufweisen, wobei die Eingangsseite mit einer Spannungsquelle verbunden ist, wobei die Ausgangsseite mit der Leitung oder den Leitungen entlang der Strecke verbunden ist, wobei jede Verbindung zwischen der Eingangsseite und der Ausgangsseite einen Verbindungspunkt aufweist, der im Fall von mehreren Phasen mit einem gemeinsamen Stempunkt aller Phasen verbunden ist, und zwar über jeweils eine Kapazität.

Auch die mehreren Leitungen der Leiteranordnung können in verschiedener Weise miteinander verschaltet sein, z.B. eine Sternpunktschaltung bilden, bei der ein Ende aller Phasenleitungen zu einem gemeinsamen Stempunkt führt. Auch ist eine Dreiecksschaltung möglich. Eine weitere Möglichkeit besteht darin, dass die Leiteranordnung in eine Mehrzahl von entlang der Fahrstrecke aufeinanderfolgende Abschnitte unterteilt ist, die wahlweise eingeschaltet werden können, d.h. Strom führen können oder nicht. Dabei können die einzelnen Abschnitte der Leiteranordnung wiederum in Stempunktschaltung oder Dreiecksschaltung geschaltet sein. Außerdem ist es möglich, dass die gegenüberliegenden Enden der einzelnen Abschnitte, die sich entsprechend der Länge der Abschnitte in Fahrtrichtung voneinander entfernt befinden, über jeweils einen oder mehrere Schalter pro Phase mit einer entlang der Strecke verlegten Versorgungsleitung verbunden sind. Bei der Versorgungsleitung kann es sich um eine Gleichspannungsleitung handeln oder um eine einphasige oder mehrphasige (z.B. die gleiche Phasenanzahl aufweisende Leitung wie die Leiteranordnung zur Erzeugung der elektromagnetischen Wechselfelder). Im Fall einer Gleichspannungs-Versorgungsleitung können die erwähnten Schalter an den Enden der Abschnitte so betrieben werden, wie die Schalter eines Wechselrichters.

Allgemeiner formuliert weist die zumindest eine Leitung der Leiteranordnung eine Mehrzahl von Bereichen auf, die sich in Fahrtrichtung entlang der Strecke befinden. Jeder Bereich erstreckt sich entlang einem anderen Abschnitt der Strecke bzw. Spur und kann separat von den anderen Bereichen ein- und ausgeschaltet werden. Entsprechend der Ausgestaltung der Leiteranordnung kann jeder dieser Bereiche eine oder mehrere Phasenleitungen aufweisen.

Dementsprechend können die Bereiche dann eingeschaltet sein, d.h. Strom führen, wenn ein Fahrzeug in dem Bereich fährt. Vorzugsweise sind die unterhalb der fahrenden Fahrzeuge angeordneten Bereiche nur dann eingeschaltet, wenn ein Fahrzeug unmittelbar über dem Bereich fährt. Daher schirmt das Fahrzeug die Umgebung über dem Bereich gegen die Ausbreitung der von dem Bereich erzeugten elektromagnetischen Wechselfelder ab. Zur Abschirmung können in oder an dem Fahrzeug besondere Maßnahmen ergriffen sein, z.B. ferromagnetische Materialien über dem Aufnehmer und/oder im Boden des Wagenkastens des Fahrzeugs angeordnet sein. Besonders bevorzugt wird, dass das Fahrzeug einen Bereich der Leiteranordnung, der eingeschaltet ist, vollständig abdeckt. In diesem Fall sind die einzelnen Bereiche der Leiteranordnung in Fahrtrichtung kürzer als die Länge eines Fahrzeuges. Um eine kontinuierliche Versorgung des Fahrzeugs mit Energie aus der Leiteranordnung zu ermöglichen, sind die Bereiche höchstens so lang wie die halbe Länge des Fahrzeugs in Fahrtrichtung. Hat das Fahrzeug einen der Bereiche mit seiner vorderen Fahrzeughälfte bereits überfahren, wird der in Fahrtrichtung vor dem derzeit aktiven, d.h. eingeschalteten Bereich liegende Bereich eingeschaltet. Unmittelbar danach oder gleichzeitig kann der bisher aktive Bereich ausgeschaltet werden.

Um das rechtzeitige Einschalten und Ausschalten zu steuern, können z.B. die oben erwähnten Einrichtungen, z.B. ein RFID, verwendet werden. Es gibt jedoch Alternativen. Z.B. kann auch eine von dem Fahrzeug in der Leiteranordnung induzierte Spannung durch entsprechende Messeinrichtungen detektiert werden und können davon abhängig Bereiche ein- und ausgeschaltet werden.

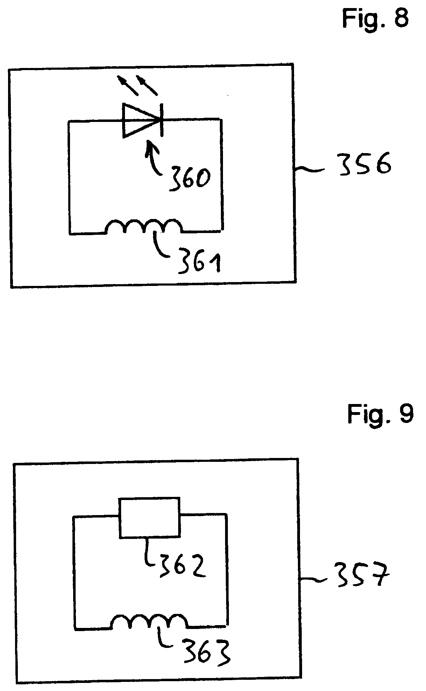

In diesem Zusammenhang wird auch auf die Offenbarung der am 04. Juli 2008 von der Anmelderin eingereichten britischen Patentanmeldung Nr. 0812345.7, Seite 8, drittletzte Zeile bis Ende der Seite 9 sowie Fig. 9 der Anmeldung mit der zugehörigen Beschreibung auf Seite 19, dritter und vierter Absatz verwiesen. Diese Offenbarung der früheren Patentanmeldung wird hiermit inhaltlich vollständig in die hier vorliegende Beschreibung mit aufgenommen.

Ausführungsbeispiele der Erfindung werden nun unter Bezugnahme auf die beigefügte Zeichnung beschrieben. Die einzelnen Figuren der Zeichnung zeigen:
- Fig. 1: einen vertikalen Querschnitt durch einen Schienenweg, wobei zwischen den zwei Fahrschienen des Schienenweges ein Ausführungsbeispiel des erfindungsgemäßen Formsteins mit einem zusätzlichen Deckel angeordnet ist,
- Fig. 2: die Anordnung gemäß Fig. 1, wobei der in Fig. 2 dargestellte vertikale Querschnitt die Anordnung an einer anderen Position in Fahrtrichtung zeigt,
- Fig. 3: einen horizontalen Querschnitt durch die Anordnung gemäß Fig. 1 und 2 auf einer Höhe, in der elektrische Leitungen zur Erzeugung eines elektromagnetischen Wechselfeldes verlegt sind,
- Fig. 4: einen horizontalen Querschnitt durch die Anordnung gemäß Fig. 1 bis Fig. 3 auf einem Höhenniveau, auf dem sich die Deckel befinden,
- Fig. 5: eine Seitenansicht auf eine Anordnung mit zwei in Fahrtrichtung hintereinander angeordneten Formsteinen, auf die jeweils ein Deckel aufgesetzt ist,
- Fig. 6: eine schematische Darstellung der Außenkonturen von zwei in Fahrtrichtung hintereinander angeordneten Formsteinen oder Deckeln, um zu zeigen, wie die hintereinander angeordneten Formsteine oder Deckel in vorgegebener Weise nebeneinander positioniert werden können,
- Fig. 7: einen vertikalen Querschnitt durch ein weiteres Ausführungsbeispiel einer Anordnung eines Formsteins mit einem Deckel,
- Fig. 8: eine schematische Darstellung zur Erläuterung der Funktionsweise einer Einrichtung, die mit einem Deckel oder einem Formstein kombiniert werden kann,
- Fig. 9: eine weitere schematische Darstellung zur Erläuterung der Funktionsweise einer weiteren Einrichtung, die mit einem Deckel oder einem Formstein kombiniert werden kann,
- Fig. 10: schematisch eine Dreiphasen-Leiteranordnung, die sich entlang einer Fahrstrecke erstreckt,
- Fig. 11: ein Diagramm, welches Wechselströme durch die drei Phasen der in Fig. 10 dargestellten Leiteranordnung zeigt,
- Fig. 12: magnetische Feldlinien eines magnetischen Feldes, das durch die Leiteranordnung gemäß Fig. 10 erzeugt wird, während ein Empfänger eines Fahrzeugs über den gezeigten Bereich der Leiteranordnung fährt, wobei sich die Fahrtrichtung in der Figurenebene von rechts nach links oder von links nach rechts erstreckt,
- Fig. 13: ein Diagramm, das schematisch die Bewegung einer magnetischen Welle zeigt, die von der Leiteranordnung gemäß Fig. 10 bis 12 erzeugt wird,
- Fig. 14: ein Schaltbild der in Fig. 1 dargestellten Anordnung, die über eine Umwandlungseinrichtung an eine Wechselspannungsquelle angeschlossen ist, um die Leiteranordnung mit einem konstanten Strom zu versorgen,
- Fig. 15: ein Schaltbild, das eine Empfangseinrichtung des Fahrzeugs zeigt, die mit einem Gleichrichter verbunden ist,
- Fig. 16: schematisch ein Schienenfahrzeug, das auf einer Fahrspur fährt, entlang der eine Leiteranordnung zur Erzeugung elektromagnetischer Wechselfelder verlegt ist, und
- Fig. 17: eine Anordnung ähnlich der in Fig. 1 gezeigten Anordnung, die schematisch eine Leiteranordnung zwischen zwei Schienen eines Schienenweges zeigt.

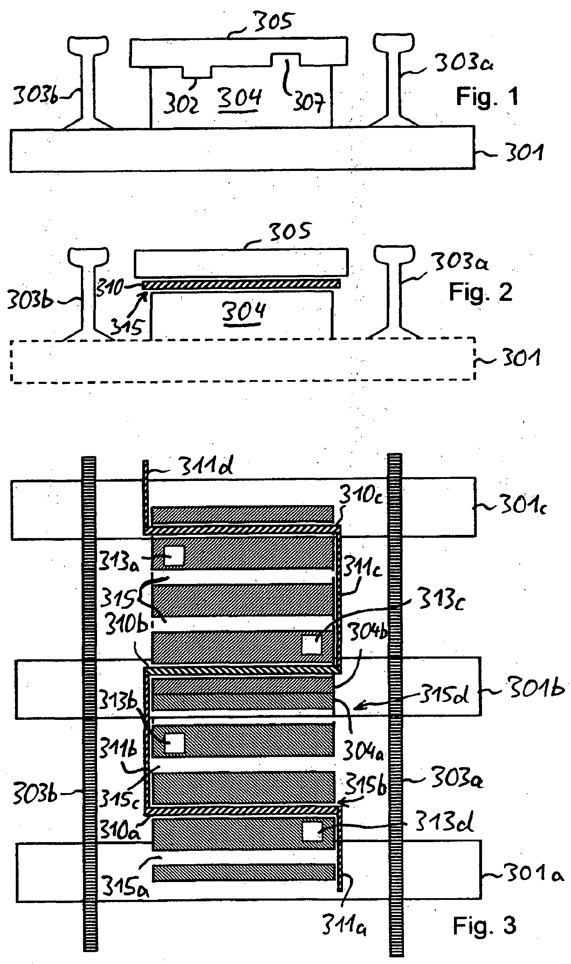

Fig. 1 zeigt eine Schwelle 301 eines Schienenweges, die z.B. aus Beton gegossen ist. Auf der Schwelle sind die Fahrschienen 303a, 303b eines Schienenweges befestigt. Die Fahrschienen 303 und somit die Fahrtrichtung erstreckt sich senkrecht zur Bildebene von Fig. 1.

Zwischen den Schienen 303 ist ein Formstein 304, z.B. ebenfalls aus Beton, jedoch ohne metallische Armierung, angeordnet. Oben ist der Formstein 304 durch einen Deckel 305 abgedeckt. Um den Formstein 304 und den Deckel 305 formschlüssig miteinander zu verbinden, weist der Deckel 305 einen nach unten vorspringenden Vorsprung 302 und der Formstein 304 einen nach oben vorspringenden Vorsprung 307 auf, die in entsprechende Ausnehmungen des jeweils anderen Teils eingreifen.

Wie Fig. 2 zeigt, weist der Formstein 304 quer zur Fahrtrichtung in horizontaler Richtung verlaufende Aussparungen 315 auf, die sich durchgehend und geradlinig von der Seite der einen Fahrschiene 303 zu der gegenüberliegenden Seite der anderen Fahrschiene 303 erstrecken. In diesen Ausnehmungen 315 sind Leitungsabschnitte 310 einer elektrischen Leitung verlegt.

Fig. 3 zeigt zwei in Fahrtrichtung (vertikaler Richtung in Fig. 3) hintereinander angeordnete Formsteine 304a, 304b. Bei diesen Formsteinen 304 handelt es sich z.B. um die in Fig. 1 und Fig. 2 dargestellte Art von Formsteinen. An der mittleren der drei in Fig. 3 dargestellten Schwellen 301a, 301b, 301c stoßen die Formsteine 304a, 304b an ihren in Fahrtrichtung bzw. entgegen der Fahrtrichtung weisenden Stirnflächen aneinander. Optional können die Formsteine 304 miteinander verbunden werden und/oder mit den Schwellen 301 verbunden werden. Grundsätzlich ist es jedoch auch möglich, Formsteine im Untergrund zu verlegen und ihre Position z.B. mit Schüttgut, wie Sand und Kies oder Erde, zu sichern.

Fig. 3 zeigt lediglich zwei Formsteine 304. Um eine Leiteranordnung zur Erzeugung elektromagnetischer Wechselfelder entlang dem Fahrweg zu verlegen, befinden sich in der Praxis eine Vielzahl der Formsteine hintereinander in Fahrtrichtung. Z.B. stößt der Formstein 304 an der Schwelle 301 c an einem weiteren Formstein an. Entsprechendes gilt für den Formstein 304a, der z.B. an der Schwelle 301a mit einem weiteren Formstein Kontakt hat.

Die Formsteine 304 weisen jeweils eine Mehrzahl der Ausnehmungen 315 auf. Im Fall des Formsteins 304a sind die Ausnehmungen, welche sich in horizontaler Richtung quer zur Fahrtrichtung erstrecken, mit den Bezugszeichen 315a, 315b, 315c, 315d bezeichnet. Die einzelnen Formsteine können jedoch auch eine andere Anzahl von parallel zueinander verlaufenden Ausnehmungen aufweisen.

Im vorliegenden Ausführungsbeispiel sind die Ausnehmungen an der Oberseite des Formsteins ausgeformt, so dass sie oben offen sind und elektrische Leitungen von oben in die Ausnehmung 315 mit ihren quer zur Fahrtrichtung verlaufenden Leitungsabschnitten 310 in die Ausnehmung 315 eingelegt werden können. In Fahrtrichtung verlaufende Leitungsabschnitte der Leitung, die in Fig. 3 mit dem Bezugszeichen 311a, 311b, 311c, 311d bezeichnet sind, verbinden die quer zur Fahrtrichtung verlaufenden Leitungsabschnitte 310a, 310b, 310c, so dass insgesamt eine serpentinenförmige Verlegung der elektrischen Leitung entsteht.

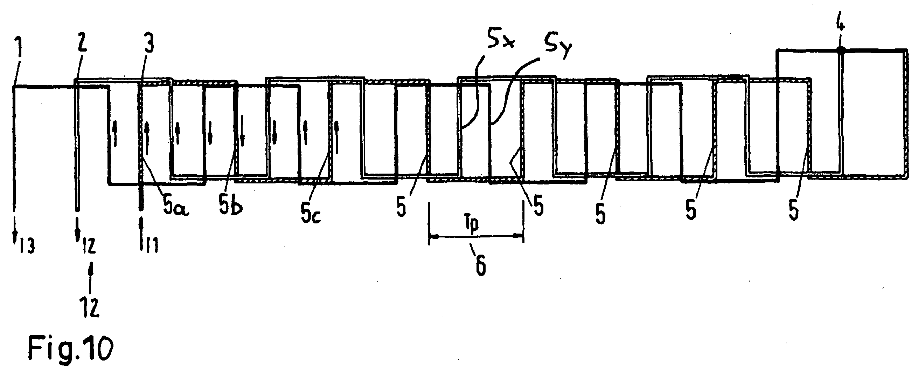

In der in Fig. 3 gezeigten Anordnung sind zwischen zwei in Fahrtrichtung aufeinanderfolgenden Abschnitten 310a, 310b, 310c der in Fig. 3 dargestellten Leitung jeweils zwei weitere Ausnehmungen 315c, 315d bzw. 315 frei, in die Leitungsabschnitte von zwei anderen Leitungen verlegt werden können. Z.B. wird von einer weiteren Phasenleitung ein quer zur Fahrtrichtung verlaufender Abschnitt von links nach rechts durch die Ausnehmung 315a verlegt und erstreckt sich der folgende in Fahrtrichtung verlaufende Abschnitt der Leitung bis zum rechten Ende der Ausnehmung 315d und von rechts nach links durch diese hindurch. Ein folgender, in Fahrtrichtung verlaufender Abschnitt der Leitung erstreckt sich dann auf der linken Seite der Formsteine 304a, 304b bis zu der oberen mit 315 bezeichneten Ausnehmung in dem Formstein 304b, usw. In entsprechender Weise kann eine weitere Phasenleitung durch die Ausnehmung 315c in dem Formstein 304a und durch die untere mit 315 bezeichnete Ausnehmung des Formsteins 304b verlegt werden. Auf ein Beispiel für eine solche Verlegung von Dreiphasenleitungen wird noch anhand von Fig. 10 eingegangen.

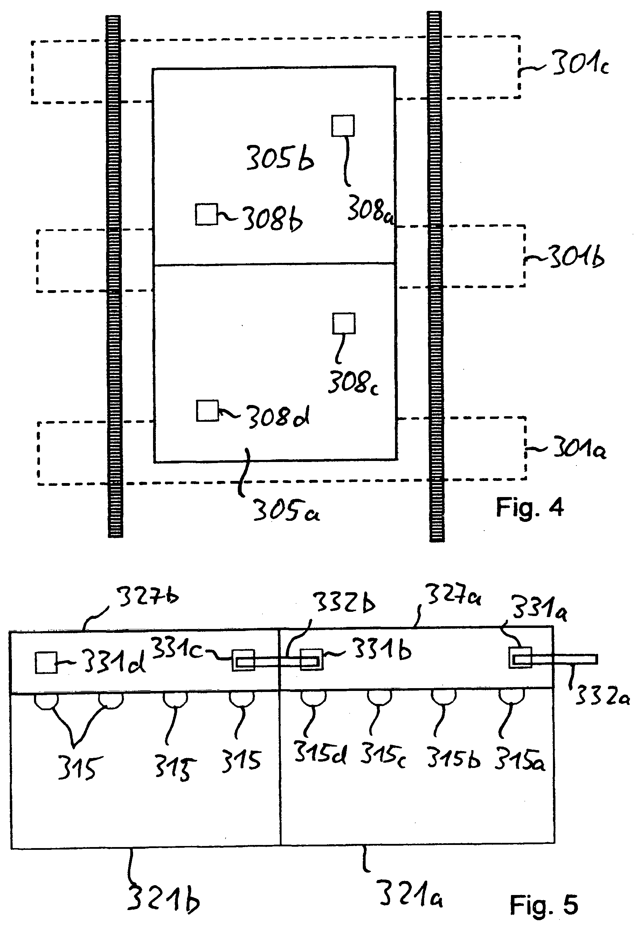

Aus Fig. 3 ist ferner erkennbar, dass an der Oberseite der Formsteine 304a, 304b jeweils Aussparungen 313 für den Eingriff nach unten vorspringender Vorsprünge 302 eines aufzulegenden Deckels vorgesehen sind. Andererseits weisen auch die Deckel 305a, 305b (siehe Fig. 4) Ausnehmungen 308 auf, in die in der Schnittebene von Fig. 3 nicht erkennbare nach oben vorspringende Vorsprünge 307 der Formsteine 304 eingreifen, wenn die Deckel 305 aufgelegt sind.

Bei den in Fig. 5 dargestellten Formsteinen 321a, 321b, die mit samt ihrer aufgelegten Deckel 327a, 327b in überhöhter Darstellung gezeigt sind, kann es sich um die anhand von Fig. 1 bis Fig. 4 beschriebenen Teile handeln oder um andere Teile. In Fig. 5 sind ebenfalls Ausnehmungen 315 an der Oberseite der Formsteine 321 dargestellt, die sich quer zur Fahrtrichtung, d.h. die sich senkrecht zur Bildebene der Fig. 5 erstrecken. Der Querschnitt der Ausnehmungen 315 ist z.B. wie gezeigt etwa halbkreisförmig, so dass Kabel auf einfache Weise in die Ausnehmungen 315 eingelegt werden können. Dabei können die Kabel einen geringeren Durchmesser als die Höhe der Ausnehmungen 315 aufweisen, so dass sie nicht über die Hüllkurve der oberen Oberfläche der Formsteine 321 hinausragen. Alternativ können die Deckel 327 Raum für die nach oben über die Hüllkurve hinausragenden elektrischen Leitungen bieten. Z.B. können die Deckel lediglich an einem Teil der oberen Oberfläche der Formsteine 321 aufliegen und/oder an ihrer Unterseite Aussparungen entsprechend den Aussparungen 315 aufweisen.

Aus Fig. 5 ist erkennbar, dass die in Fahrtrichtung, d.h. von rechts nach links, hintereinander angeordneten Deckel 327a, 327b an ihrer Seite Aussparungen 331 a, 331b, 331c, 331d aufweisen. Durch Anziehen von Spannvorrichtungen 332a, 332b, die wie der Fall der Spannvorrichtung 332b zeigt in jeweils eine Ausnehmung 331 im Endbereich der benachbarten Deckel eingreifen, insbesondere durch Verkürzen der Länge der Spannvorrichtungen 332 in Fahrtrichtung, werden die hintereinander liegenden Deckel 327 miteinander verspannt.

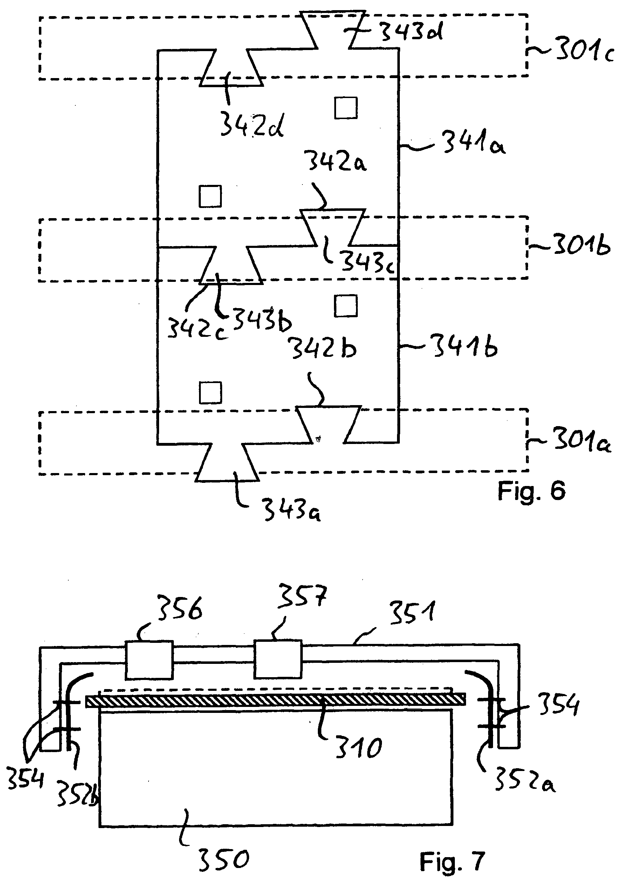

In spezieller Ausgestaltung können die Deckel, z.B. die Deckel 305 gemäß Fig. 1 bis Fig. 4 oder die Deckel 327 gemäß Fig. 5, oder die Formsteine 304 gemäß Fig. 1 bis Fig. 4 oder die Formsteine 321 gemäß Fig. 5, wie in Fig. 6 gezeigt in Fahrtrichtung und entgegen der Fahrtrichtung vorspringende Bereiche 343 aufweisen, die in entsprechende Ausnehmungen 342 des in Fahrtrichtung benachbarten Formsteins oder Deckels 341 eingreifen. Die in Fig. 6 gezeigte Formgestaltung der Vorsprünge und Ausnehmungen ist lediglich ein Beispiel. Sie kann wie in Fig. 6 gezeigt so gestaltet sein, dass sich der Vorsprung 343 in Richtung auf sein freies Ende verbreitert, so dass ein unbeabsichtigtes Lösen der formschlüssigen Verbindung zwischen benachbarten Teilen 341 verhindert wird. Die Formgestaltung kann jedoch auch so sein, dass eine Relativbewegung in Fahrtrichtung noch möglich ist. In diesem Fall verhindern die Vorsprünge und Ausnehmungen zumindest, dass die hintereinander in Fahrtrichtung angeordneten Teile 341 nicht seitlich quer zur Fahrtrichtung verrutschen können Insbesondere wenn Spannmittel oder andere Verbindungen wie anhand von Fig. 5 beschrieben außerdem vorgesehen sind, reicht eine solche Ausgestaltung der sich in Fahrtrichtung erstreckenden Vorsprünge und Ausnehmungen aus.

Eine weitere Ausführungsform bzw. weitere optionale Merkmale eines Deckels 351 werden nun anhand von Fig. 7 beschrieben. Der Deckel 351 weist an seinen quer zur Fahrtrichtung in horizontaler Richtung einander gegenüberliegenden Enden jeweils einen nach unten abgewinkelten Verlauf auf. An diesen abgewinkelten Enden ist mit Hilfe von Befestigungen 354 jeweils ein Abschirmblech 352 befestigt, das dazu dient, die von den verlegten elektrischen Leitungen erzeugten elektromagnetischen Wechselfelder seitlich abzuschirmen. Dabei können die Abschirmbleche 352 wie in Fig. 7 gezeigt einen oben nach innen gekrümmten Verlauf aufweisen, so dass eine Abschirmungswirkung auch in Richtungen erzielt wird, die sich aus Sicht der Leiteranordnung nach seitlich oben erstrecken.

Durch die nach unten verlaufenden abgewinkelten Enden des Deckels wird die Leiteranordnung auch mechanisch vor äußeren Einflüssen geschützt. Einen solchen abgewinkelten Verlauf können die Enden auch dann haben, wenn keine Abschirmbleche vorgesehen sind.

In den Deckel 351 kann eine Einrichtung 356 integriert sein, die von oben sichtbar Licht emittieren kann. Fig. 8 zeigt schematisch einen möglichen Aufbau einer solchen Licht emittierenden Einrichtung 356. Die Einrichtung 356 weist z.B. zumindest eine Leuchtdiode 360 auf, die an eine Induktionsspule 361 angeschlossen ist. Dabei ist die in Fig. 8 angedeutete Schaltung lediglich schematisch zu verstehen. In einer praktischen Ausführungsform kann die Schaltung weitere Schaltungsbestandteile aufweisen, z.B. können mehrere Leuchtdioden vorgesehen sein und/oder können mehrere Induktionsspulen vorgesehen sein. Über die zumindest eine Induktionsspule 361 empfängt die Einrichtung 356 einen Teil des von der darunter liegenden Leiteranordnung emittierten elektromagnetischen Wechselfeldes, wenn die Leiteranordnung von Wechselstrom durchflossen wird. Die empfangene Energie induziert in der Spule 361 eine elektrische Spannung, welche die Leuchtdiode 360 zum Leuchten bringt.

Alternativ oder zusätzlich kann in den Deckel 351 eine Detektionseinrichtung 357 integriert sein. Wiederum in schematischer Darstellung der Schaltung (siehe Fig. 9) ist eine Induktionsspule 363 erkennbar, die z.B. von einem über dem Deckel 351 fahrenden Fahrzeug ausgesendete elektromagnetische Wechselfelder empfängt, welche zusätzlich eine codierte Information enthalten. Die in der Induktionsspule 361 induzierte elektrische Wechselspannung versorgt eine mit ihr verbundene Detektionseinheit 362 mit elektrischer Energie und führt dieser Detektionseinheit 362 zusätzlich die codierte Information zu Abhängig von dem empfangenen Code und gegebenenfalls abhängig von in der Detektionseinheit 362 abgelegten Information sendet diese Einheit 362 gegebenenfalls Signale aus, um Funktionen im Zusammenhang mit dem Betrieb der Leiteranordnung zu steuern, z.B. das Ein- oder Ausschalten von Bereichen der Leiteranordnung.

Fig. 10 zeigt eine Leiteranordnung in schematischer Darstellung. Bei der Leiteranordnung kann es sich z.B. um einen selbständig ein- und ausschaltbaren Bereich handeln, wobei mehrere dieser Bereiche in Fahrtrichtung hintereinander angeordnet sind. Die Fahrtrichtung erstreckt sich in Fig. 10 von rechts nach links oder links nach rechts. Die Leiteranordnung weist drei Leitungen 1, 2, 3 auf, die jeweils Abschnitte aufweisen, die sich quer zur Fahrtrichtung erstrecken. Lediglich einige der sich quer zur Fahrtrichtung erstreckenden Abschnitte der Leitungen 1, 2, 3 sind mit Bezugszeichen bezeichnet, nämlich drei Abschnitte 5a, 5b, 5c der Leitung 3 und einige weitere Abschnitte der Leitung 3 (mit Bezugszeichen "5"), ein Abschnitt 5x der Leitung 2 und ein Abschnitt 5y der Leitung 1. Die gesamte Leiteranordnung kann z.B. durch Verlegung von drei Leitungen in Aussparungen von hintereinander angeordneten Formsteinen, z.B. wie anhand von Fig. 1 beschrieben, realisiert werden.

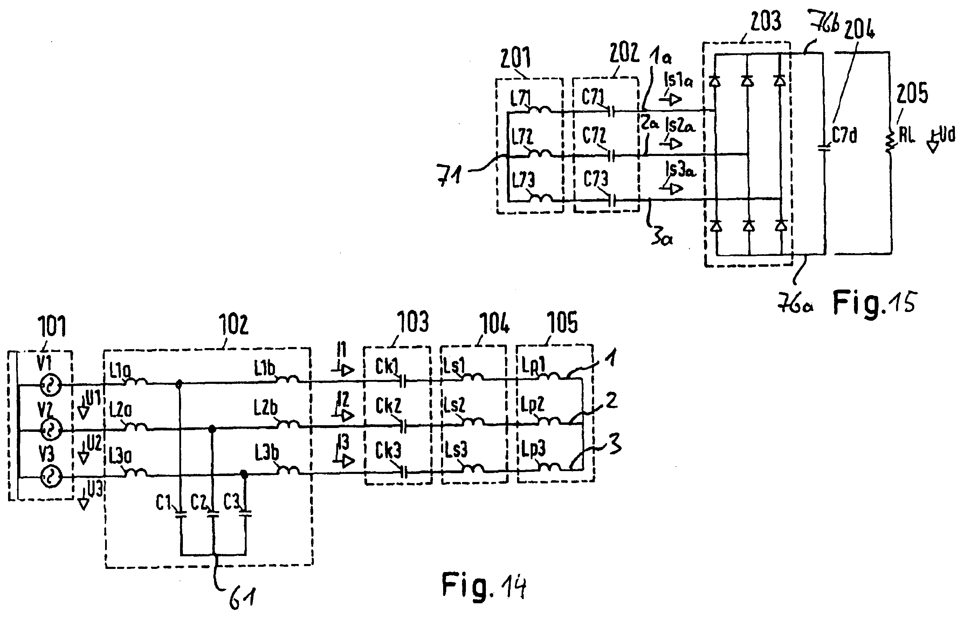

Z.B. wie anhand von Fig. 14 noch beschrieben wird, können die drei Leitungen 1, 2, 3 an eine dreiphasige Wechselstromquelle angeschlossen sein. In dem in Fig. 10 dargestellten Moment fließt ein positiver Strom l1 durch Leitung 3. "Positiv" bedeutet, dass der Strom aus der Stromquelle in die Leitung fließt. Entsprechend fließt momentan wie dargestellt jeweils ein negativer Strom 12, l3 durch die Leitung 2, 1. Die drei Leitungen 1, 2, 3 sind an dem anderen Ende über einen gemeinsamen Stempunkt 4 verbunden. Daher ist zumindest immer einer der Ströme durch die Leitungen 1, 2, 3 positiv und einer negativ. Die Richtung der Ströme in der dargestellten Situation ist für einige der sich quer zur Fahrtrichtung erstreckenden Leitungsabschnitte durch Pfeile angedeutet. Wie erkennbar ist, sind diese Leitungsabschnitte so verlegt, dass jeweils drei aufeinanderfolgende Abschnitte, die durch Abschnitte verschiedener Leitungen gebildet werden, von Strom in derselben Richtung durchflossen werden. Dadurch lassen sich ausgeprägte magnetische Pole erzielen. Anders als bei der Anordnung gemäß Fig. 10 können die Enden der Leitungen 1, 2, 3 an dem Stempunkt aufgetrennt sein und dort wie auch an dem anderen Ende mit einer Versorgungsleitung verbunden sein, d.h. es kann auf den Stempunkt 4 verzichtet werden.

Die Abschnitte der Leitung 3 und die entsprechenden Abschnitte der Leitungen 1, 2, die sich quer zur Fahrtrichtung erstrecken, haben vorzugsweise dieselbe Länge und sind parallel zueinander angeordnet. Anders als in Fig. 10 der besseren Erkennbarkeit wegen dargestellt, sind die quer zur Fahrtrichtung verlaufenden Abschnitte der Leitungen 1, 2, 3 vorzugsweise nicht quer zur Fahrtrichtung gegeneinander versetzt angeordnet. Die versetzte Darstellung erlaubt in Fig. 10 jedoch die Verfolgung der einzelnen Leitungen.

Vorzugsweise verläuft jede der Leitungen 1, 2, 3 in der gleichen Weise entlang einem serpentinenförmigen Weg, wobei jedoch die verschiedenen Leitungen 1, 2, 3 in Fahrtrichtung gegeneinander versetzt verlaufen, und zwar um ein Drittel des Abstandes zwischen aufeinanderfolgenden quer verlaufenden Abschnitten derselben Leitung. Z.B. wie in der Mitte von Fig. 1 dargestellt ist, ist der Abstand zwischen aufeinanderfolgenden Abschnitten 5 durch T_{P} bezeichnet, dem Polabstand einer Leitung. Innerhalb des Bereichs zwischen diesen aufeinanderfolgenden Abschnitten 5 liegen zwei andere Abschnitte, die ebenfalls quer zur Fahrtrichtung verlaufen, nämlich Abschnitt 5x von Leitung 2 und Abschnitt 5y von Leitung 1. Dieses Muster von aufeinanderfolgenden Abschnitten 5, 5x, 5y wiederholt sich bei konstanten Abständen in Fahrtrichtung.

Als Ergebnis dieser dreifachen serpentinenförmigen Anordnung von Leitungen wird ein magnetisches Wechselfeld erzeugt. Z.B. erzeugen die Abschnitte 5a, 5b, 5c der Leitung 3 alternierend magnetische Pole mit umgekehrter Polarität, da die Abschnitte alternierend in umgekehrter Richtung von Strom durchflossen werden. Z.B. kann die Polarität des von der Leitung 3 in Abschnitt 5a erzeugten magnetischen Pols zu dem dargestellten Zeitpunkt einem magnetischen Dipol entsprechen, bei dem der magnetische Nordpol nach oben gerichtet ist und der magnetische Südpol nach unten gerichtet ist. Zum gleichen Zeitpunkt würde daher der Abschnitt 5b einen magnetischen Dipol erzeugen, dessen Nordpol nach unten gerichtet ist und dessen Südpol nach oben gerichtet ist. Wegen der gleichen Stromrichtungen sind die benachbarten Abschnitte der Leitungen 1, 2 momentan in der gleichen Richtung von Strom durchflossen und tragen daher zu den Feldstärken der genannten magnetischen Dipole bei.

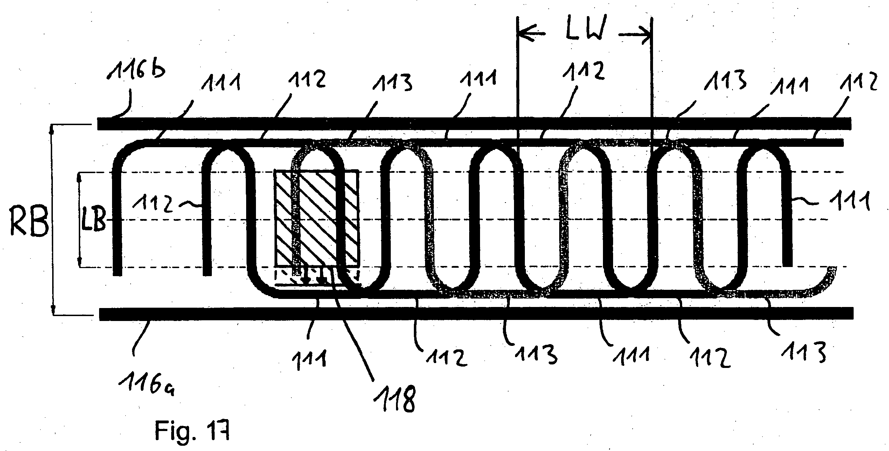

Wie aus Fig. 17 erkennbar ist, kann sich eine ähnliche Anordnung von serpentinenförmig verlaufenden Leitungen 111, 112, 113 zwischen zwei Fahrschienen 116a, 116b eines Schienenweges befinden. Wiederum weist jede der Leitungen 111, 112, 113 geradlinig und quer zur Fahrtrichtung verlaufende Abschnitte auf. Diese quer verlaufenden Abschnitte sind mit den folgenden quer verlaufenden Abschnitten derselben Leitung über in Längsrichtung verlaufende Abschnitte verbunden, die daher parallel zu den Schienen 116 verlaufen. Die quer zur Fahrtrichtung geradlinig verlaufenden Abschnitte haben eine Länge LP, die vorzugsweise zumindest die Hälfte des Abstandes RP zwischen den Schienen 116 beträgt. Z.B. kann der Abstand RP 1m betragen und die Länge LP der quer verlaufenden Abschnitte kann 50 cm betragen oder im Bereich von 50 bis 75 cm liegen. Die quer verlaufenden Abschnitte und die in Fahrtrichtung verlaufenden Abschnitte derselben Leitung sind wie in Fig. 17 dargestellt durch gekrümmte, d.h. kurvenförmige, Übergangsbereiche miteinander verbunden. Die Krümmung kann z.B. einem Kreis mit einem Radius von 150 mm entsprechen.

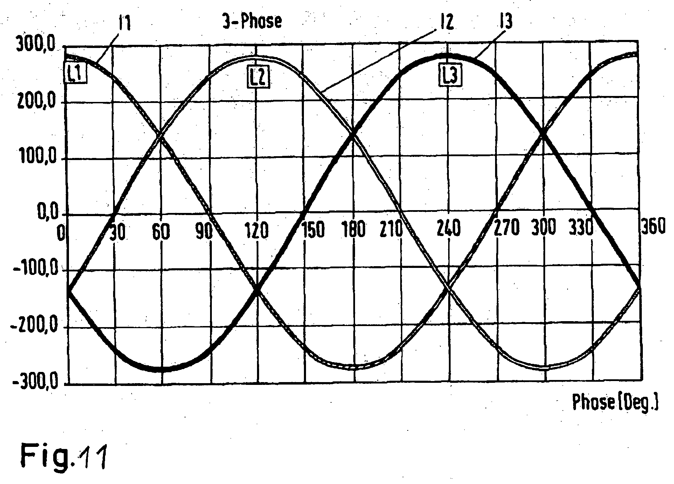

Fig. 17 zeigt schematisch eine schraffierte Fläche 118, die z.B. der Fläche eines Aufnehmers eines Fahrzeuges entspricht, der auf den Schienen 116 fährt. Die Breite des Aufnehmers, z.B. dessen Spulen, ist gleich der Länge der sich quer zur Fahrtrichtung erstreckenden Abschnitte der Leitungen. In der Praxis wird es bevorzugt, dass die Breite des Aufnehmers zumindest gleich der Länge LP der quer verlaufenden Abschnitte ist. Dies ermöglicht es, dass sich die Position des Aufnehmers quer zur Fahrtrichtung verändern kann, wie es durch zwei Pfeile an der Unterkante der Fläche 118 in Fig. 17 angedeutet ist, ohne dass es zu Schwankungen bei der in dem Aufnehmer induzierten Spannung kommt. Wie in Fig. 11 gezeigt ist, kann die Amplitude des in den Leitungen 1, 2, 3 fließenden Stroms z.B. in dem Bereich von 300 bzw. -300 A liegen. Es sind jedoch auch größere oder kleinere Amplituden möglich. 300 A ist ein Wert, der ausreicht, um Antriebsenergie zu einer Straßenbahn zu übertragen, so dass die Straßenbahn sich mit Hilfe der übertragenen Energie und eventuell zusätzlicher Energie aus einem in dem Fahrzeug angeordneten Energiespeicher über einige hundert Meter oder einige wenige Kilometer bewegen kann, z.B. innerhalb des historischen Zentrums einer Stadt. Als zusätzliche Energiespeicher kommen z.B. elektrochemische Batterien und/oder Superkondensatoren-Anordnungen in Frage. Der Energiespeicher kann z.B. dann wieder mit Strom aus einer Oberleitung voll aufgeladen werden, wenn die Straßenbahn das Zehtrum der Stadt verlassen hat. Der Energiespeicher in dem Fahrzeug ermöglicht den Betrieb aller Verbraucher während der Fahrt ohne Oberleitung. Falls die gespeicherte Energie jedoch nicht mehr ausreicht, können Verbraucher abgeschaltet werden und kann die Straßenbahn dennoch selbständig weiterfahren. Die induktiv übertragene Energie reicht hierzu aus.

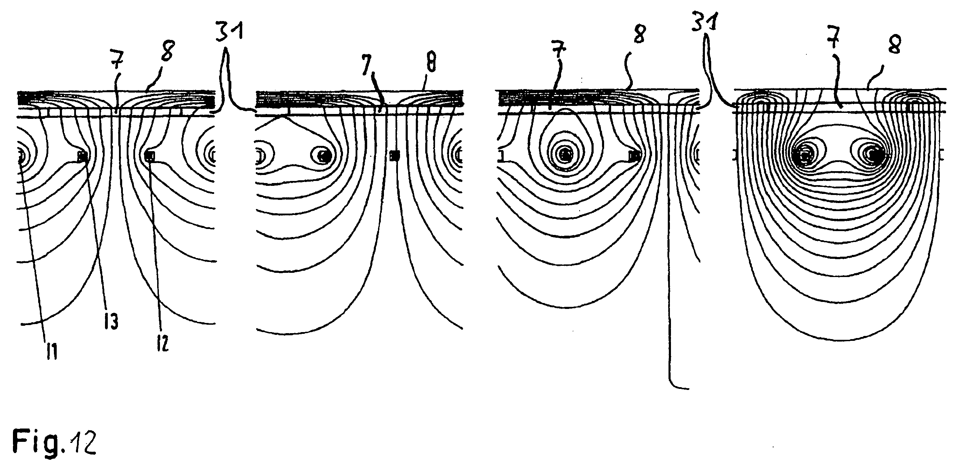

Die gebogenen Linien in Fig. 12 sind Feldlinien eines magnetischen Feldes, das durch die Leitungen 1, 2, 3 gemäß Fig. 10 erzeugt wurde. Fig. 3 zeigt in vier verschiedenen Momentaufnahmen jeweils den Zustand der Feldlinien, wobei die vier den Momentaufnahmen zugrundeliegenden Zeitpunkte den Phasenwinkeln 0, 30, 60, 90 auf der Zeitskala bzw. Winkelskala in Fig. 11 entsprechen. Die Bezugszeichen L1, L2, L3 in Fig. 11 stehen für die einzelnen Leitungen 1, 2, 3 bzw. deren Induktivitäten, die zur induktiven Übertragung der Energie zu dem Fahrzeug benötigt werden. Die Darstellung in Fig. 11 zeigt den Verlauf über einen vollen Zyklus des in den Leitungen fließenden Wechselstroms. In dem linken der vier Teilbilder von Fig. 12 sind Querschnitte der sich quer zur Fahrtrichtung erstreckenden Abschnitte von Leitung 1, 2, 3 dargestellt. Bezugszeichen "l1" bezeichnet den Strom durch Leitung 1 usw. Diese Leitungsabschnitte verlaufen senkrecht zur Bildebene von Fig. 12, wobei die Bildebene von Fig. 12 eine in Fahrtrichtung verlaufende vertikale Schnittebene durch die Anordnung von Fig. 10 oder z.B. der Anordnung von Fig. 3 ist. Im oberen Bereich der Fig. 12 sind elektromagnetische Spulen 7 als flache, rechteckig umrandete Gebiete gezeichnet. Über diesen Spulen 7, die Teil eines Aufnehmers an oder in einem Fahrzeug sind, um die Energie aus dem elektromagnetischen Wechselfeld zu empfangen, sind ferromagnetische Rückschlüsse 8 angeordnet, um die Magnetfeldlinien zu bündeln und umzulenken. Diese Rückschlüsse 8 haben eine entsprechende Funktion wie die Kerne eines Elektromagneten.

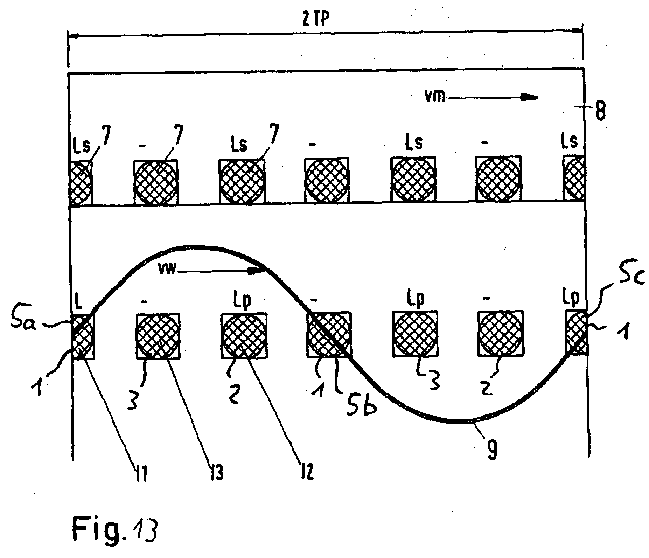

Fig. 13 zeigt einen Schnitt entlang einer Schnittebene, die sich vertikal und in Fahrtrichtung erstreckt. Die Leitungen oder Kabel der Leitungen 1, 2, 3 sind im unteren Teil der Figur im Querschnitt erkennbar. In der oberen Hälfte der Figur sind entsprechende Leitungen der Spule 7 des Aufnehmers dargestellt, die sich ebenfalls quer zur Fahrtrichtung erstrecken und, im dargestellten Ausführungsbeispiel, denselben Abstand zu benachbarten quer verlaufenden Abschnitten wie bei der Leiteranordnung entlang der Strecke aufweisen. Drei der in Fig. 10 dargestellten quer zur Fahrtrichtung verlaufenden Leitungsabschnitte 5a, 5b, 5c der Leitung 1 sind gekennzeichnet. Insgesamt sind sieben Abschnitte der Leiteranordnung zumindest teilweise in Fig. 13 dargestellt. Da die Richtung des Stroms l1 durch den Abschnitt 5b der Richtung des Stroms l1 durch die Abschnitte 5a, 5c entgegengesetzt gerichtet ist und da die Ströme l1, l3, l2 Wechselströme sind, bewegt sich die resultierende elektromagnetische Welle in der Fahrtrichtung mit einer Geschwindigkeit vw. Die Welle ist mit dem Bezugszeichen 9 bezeichnet, die Induktivitäten der Anordnung mit Lp. Da sich das Fahrzeug in Fahrtrichtung bewegt, ist die Bewegungsgeschwindigkeit des Aufnehmers in der oberen Hälfte von Fig. 13 mit vm bezeichnet. "2 TP" bezeichnet, dass Fig. 13 einen Bereich der Leiteranordnung darstellt, der doppelt so lang wie die Abstände zwischen aufeinanderfolgenden quer verlaufenden Abschnitten derselben Leitung, hier z.B. der Leitung 1, ist.

Die in Fig. 14 dargestellte Anordnung weist eine Leiteranordnung 103, 104, 105 auf, die die in Fig. 10 dargestellte Anordnung sein kann. Es ist ein Ersatzschaltbild dargestellt, um die elektrischen Eigenschaften schematisch darzustellen. Das Dreiphasen-System 103, 104, 105 führt die Phasenströme l1, l2, l3 in den Phasen 1, 2, 3. Die inhärenten Induktivitäten der Phasen 1, 2, 3 sind mit Lp1, Lp2, Lp3 bezeichnet, die für die induktive Übertragung der Energie zu dem Fahrzeug genutzt werden können. Jedoch weisen die Leitungen 1, 2, 3 auch parasitäre Induktivitäten oder Streuinduktivitäten Ls1, Ls2, Ls3 wie in Block 104 dargestellt auf. Die gesamte Impedanz der Induktivitäten Lp, Ls wird durch Kapazitäten Ck1, Ck2, Ck3 in den Leitungen 1, 2, 3 (in Block 103 dargestellt) zu Null kompensiert.

Spannungsquellen V1, V2, V3 sind in Block 101 dargestellt. Die erzeugten Spannungen sind mit U1, U2, U3 bezeichnet. Die Spannungsquellen sind mit dem Eingang einer Konstantstromquelle 102 verbunden. Ein Ausgang dieser Quelle 102 ist mit den Kapazitäten in Block 103 verbunden. Die Kapazitäten müssen jedoch nicht direkt am Ausgang der Konstantstromquelle 102 liegen. Dies ist lediglich schematisch zu verstehen. Am Ausgang der Konstantstromquelle 102 werden Ströme l1, l2, l3 erzeugt, deren Mittelwert im Laufe der Zeit konstant bleibt, unabhängig davon, wie viel Energie von den Leitungen 1, 2, 3 zu einem oder mehreren Fahrzeugen pro Zeiteinheit übertragen wird. An der Eingangsseite der Konstantstromquelle 102 weist diese in jeder Leitung 1, 2, 3 eine Eingangsinduktivität L1a, L2a, L3a auf. An der Ausgangsseite der Stromquelle 102 weist jede der Leitungen 1, 2, 3 eine Ausgangsinduktivität L1b, L2b, L3b auf. Zwischen den Eingangs- und Ausgangsinduktivitäten ist jede der Leitungen 1, 2, 3 mit einem gemeinsamen Sternpunkt 61 verbunden, und zwar über jeweils eine Kapazität C1, C2, C3.

Fig. 15 zeigt ein Schaltbild einer Anordnung, die in oder an einem Fahrzeug realisiert sein kann, das entlang der Spur bzw. Fahrstrecke fährt. Die Anordnung weist einen Dreiphasen-Aufnehmer zum Empfangen der von der Leiteranordnung gemäß Fig. 10 oder 14 erzeugten elektromagnetischer Felder auf und zur Erzeugung einer entsprechenden induzierten

Wechselspannung zur Energieversorgung in dem Fahrzeug. Der Aufnehmer weist eine Anordnung von Spulen mit einer Spule für jede Phase 1a, 2a, 3a auf, wobei die Spulen durch Bezugszeichen L71, L72, L73 in Block 201 bezeichnet sind. In der dargestellten Ausführungsform sind die Phasen 1a, 2a, 3a über einen gemeinsamen Stempunkt 71 miteinander verbunden. Die anderen Enden der Spulen sind über Kapazitäten C71, C72, C73 (Block 202) zur Kompensation der Induktivitäten mit einem Ausgang des Aufnehmers verbunden, an dem wie schematisch dargestellt Ströme Is1a, Is2a, Is3a fließen. Dabei handelt es sich um Wechselströme, die jeweils einer Phase eines Dreiphasen-Gleichrichters 203 zugeführt werden, an dessen Ausgangsleitungen 76a, 76b dann eine Gleichspannung anliegt. Zur Glättung der Gleichspannung ist ein Glättungskondensator C7d (Bezugszeichen 204) vorgesehen. Dabei kann es sich auch um einen Energiespeicher handeln, z.B. um eine Anordnung von Superkondensatoren. Die Last in dem Fahrzeug ist durch einen Widerstand RL mit Bezugszeichen 205 und eine darüber abfallende Spannung Ud bezeichnet.

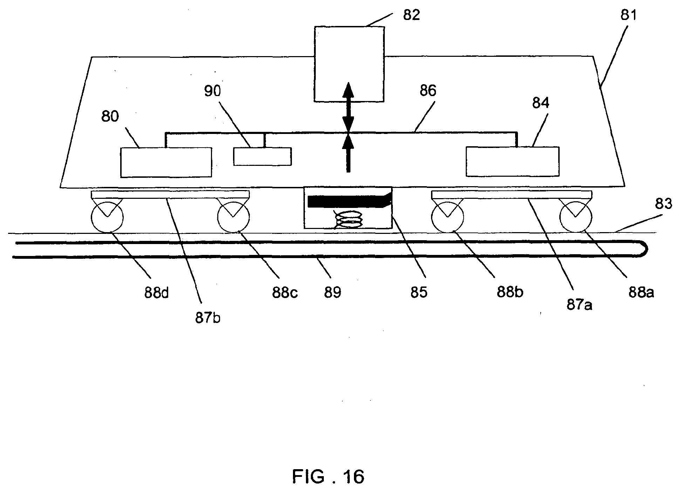

Fig. 16 zeigt eine Fahrspur 83 (hier z.B. einen Schienenweg mit zwei Fahrschienen), der von einem Fahrzeug 81, z.B. einem Regionalzug oder einer Straßenbahn, befahren wird. In schematischer Darstellung weist die in Fig. 16 gezeigte elektrische Anordnung eine Leiteranordnung 89 zum Erzeugen elektromagnetischer Wechselfelder und dadurch zum Übertragen von Energie zu dem Fahrzeug 81 auf. Die Leiteranordnung 89 kann z.B. wie in Fig. 3 oder Fig. 10 beschrieben aufgebaut sein. Insbesondere können erfindungsgemäße Formsteine zur Verlegung der Leiteranordnung 89 verwendet werden. An seiner Unterseite weist das Fahrzeug 81 einen Aufnehmer 85 auf. Der Aufnehmer 85 ist elektrisch mit dem Bordnetz 86 des Fahrzeugs 81 verbunden. Eine in dem Aufnehmer 85 induzierte Spannung kann daher zur Versorgung der elektrischen Verbraucher an dem Netz 86 genutzt werden. Z.B. sind Hilfsbetriebe 90 und Antriebseinheiten 80, 84 zum Versorgen von Fahrmotoren (nicht dargestellt) in Drehgestellen 87a, 87b mit Rädern 88 an das Netz 86 angeschlossen. Außerdem kann ein Energiespeicher 82, z.B. ein elektrochemischer Energiespeicher oder eine Anordnung von Kondensatoren, z.B. Superkondensatoren, an das Netz 86 angeschlossen sein. Daher kann der Energiespeicher 82 geladen werden, wenn der Aufnehmer entsprechende Energie bereitstellt. Dies ist z.B. dann der Fall, wenn das Fahrzeug an einer Haltestelle hält. Während der Fahrt jedoch kann Energie gleichzeitig aus dem Energiespeicher 82 entnommen werden, während auch der Aufnehmer 85 Energie bereitstellt.

## Patentansprüche

1. Anordnung zur induktiven Übertragung von Energie von einer Strecke zu einem entlang der Strecke fahrenden Fahrzeug, wobei die Anordnung aufweist:
- einen Formstein (304) zum Positionieren und/oder Halten einer Mehrzahl von Leitungsabschnitten (310; 5x, 5y) einer oder mehrerer elektrischer Leitungen entlang einem Fahrweg eines Fahrzeuges, wobei der Formstein (304) eine Mehrzahl von Aussparungen (315) und/oder Vorsprünge aufweist, wobei Ränder der Aussparungen (315) und/oder die Vorsprünge für die Leitungsabschnitte (310; 5x, 5y) jeweils einen Raum begrenzen, in den einer der Leitungsabschnitte (310; 5x, 5y) einbringbar ist, so dass er sich in einer Längsrichtung des Raumes durch den Raum erstreckt, und wobei sich die Längsrichtungen der durch die Ränder der Aussparungen (315) und/oder durch die Vorsprünge begrenzten Räume im Wesentlichen parallel zueinander in einer gemeinsamen Ebene erstrecken,
- die Leitungsabschnitte (310; 5x, 5y), die sich durch die Räume erstrecken,
wobei der Formstein (310; 5x, 5y) aus elektrisch isolierendem Material besteht, **dadurch gekennzeichnet, dass**
• zumindest zwei durchgehende elektrische Leitungen (1, 2, 3) die Leitungsabschnitte (310; 5x, 5y) bilden, wobei jede der elektrischen Leitungen (1, 2, 3) ausgestaltet ist und beim Betrieb der Anordnung so betrieben wird, dass sie eine Phase (U, V, W) eines Mehrphasen-Wechselstroms führt,
• jeweils ein Teil der Leitungsabschnitte (310; 5x, 5y) von einer der elektrischen Leitungen (1, 2, 3) gebildet wird, sodass sich im Verlauf jeder der elektrischen Leitungen (1, 2, 3) in Längsrichtung durch die Räume erstreckende, erste Leitungsabschnitte (310; 5x, 5y) über andere, zweite Leitungsabschnitte (311) der elektrischen Leitung (1, 2, 3) miteinander verbunden sind und wobei sich die zweiten Leitungsabschnitte (311) alternierend an gegenüberliegenden Seiten des Formsteins (304) erstrecken, sodass die elektrischen Leitungen (1, 2, 3) jeweils einen serpentinenförmigen Weg durchlaufen,
• die ersten Leitungsabschnitte (310; 5x, 5y) der elektrischen Leitungen (1, 2, 3), die beim Betrieb der Anordnung die einzelnen Phasen (U, V, W) des Mehrphasen-Wechselstroms führen, in Fahrtrichtung der Fahrzeuge eine sich wiederholende Folge bilden, bei der auf einen ersten Leitungsabschnitt (5y) einer (1) der elektrischen Leitungen ein erster Leitungsabschnitt (5x) einer anderen (2) der elektrischen Leitungen folgt.

2. Anordnung nach dem vorhergehenden Anspruch, wobei sich die Aussparungen (315) mit den Längsrichtungen im Wesentlichen parallel zueinander an einer Oberfläche des Formsteins (304) erstrecken.

3. Anordnung nach einem der vorhergehenden Ansprüche, mit einem Deckel (305), der die sich durch die Räume erstreckenden Leitungsabschnitte (310; 5x, 5y) abdeckt.

4. Anordnung nach einem der vorhergehenden Ansprüche, wobei eine Mehrzahl der Formsteine (304) entlang einem Fahrweg (303) des Fahrzeuges hintereinander angeordnet ist, sodass sich die Längsrichtungen der durch die verschiedenen Formsteine (304) gebildeten Räume zur Aufnahme der Leitungsabschnitte (310; 5x, 5y) im Wesentlichen parallel zueinander erstrecken, wobei die Längsrichtungen quer zur Fahrtrichtung des Fahrzeuges verlaufen.

5. Anordnung nach einem der vorhergehenden Ansprüche, wobei eine Mehrzahl der Formsteine (304) zwischen den Fahrschienen (303a, 303b) eines Schienenweges für Schienenfahrzeuge hintereinander angeordnet ist, sodass die Längsrichtungen der Räume zur Aufnahme der Leitungsabschnitte (310; 5x, 5y) in einer im Wesentlichen horizontalen Ebene und quer zur Fahrtrichtung des Fahrzeuges verlaufen.

6. Anordnung nach einem der vorhergehenden Ansprüche, wobei die Anordnung zumindest eine Leuchte (360) und eine Strom-Detektionseinrichtung (361) aufweist, wobei die Strom-Detektionseinrichtung (361) derart mit einer elektrischen Leitung (310, 311), die zumindest einen der Leitungsabschnitte (310; 5x, 5y) bildet, und mit der Leuchte (360) kombiniert ist, dass die Leuchte (360) leuchtet, wenn elektrischer Strom durch die Leitung fließt.

7. Verfahren zum Herstellen einer Anordnung zur induktiven Übertragung von Energie von einer Strecke zu einem entlang der Strecke fahrenden Fahrzeug, wobei
• zum Positionieren und/oder Halten einer Mehrzahl von Leitungsabschnitten (310; 5x, 5y) einer oder mehrerer elektrischer Leitungen entlang einem Fahrweg eines Fahrzeuges zumindest ein Formstein (304) bereitgestellt wird, der eine Mehrzahl von Aussparungen (315) und/oder Vorsprünge aufweist, wobei Ränder der Aussparungen (315) und/oder die Vorsprünge für die Leitungsabschnitte (310; 5x, 5y) jeweils einen Raum begrenzen, in den einer der Leitungsabschnitte (310; 5x, 5y) einbringbar ist, so dass er sich in einer Längsrichtung des Raumes durch den Raum erstreckt, und wobei sich die Längsrichtungen der durch die Ränder der Aussparungen (315) und/oder durch die Vorsprünge begrenzten Räume im Wesentlichen parallel zueinander in einer gemeinsamen Ebene erstrecken,
• der Formstein (310; 5x, 5y) aus elektrisch isolierendem Material besteht,
• zumindest eine elektrische Leitung derart in die Räume eingebracht wird, dass Leitungsabschnitte (310; 5x, 5y) der Leitung sich in Längsrichtung durch die Räume erstrecken,
**dadurch gekennzeichnet, dass**
• unter Verwendung von zumindest zwei durchgehenden elektrischen Leitungen (1, 2, 3) die Leitungsabschnitte (310; 5x, 5y) gebildet werden, wobei jede der elektrischen Leitungen (1, 2, 3) ausgestaltet wird und beim Betrieb der Anordnung so betrieben wird, dass sie eine Phase (U, V, W) eines Mehrphasen-Wechselstroms führt,
• die Leitungen (1, 2, 3) derart in die Räume eingebracht werden, dass jeweils ein Teil der Leitungsabschnitte (310; 5x, 5y) von einer der durchgehenden elektrischen Leitungen (1, 2, 3) gebildet wird, sodass sich im Verlauf jeder der elektrischen Leitungen (1, 2, 3) in Längsrichtung durch die Räume erstreckende, erste Leitungsabschnitte (310; 5x, 5y) über andere, zweite Leitungsabschnitte (311) der elektrischen Leitung miteinander verbunden sind, und wobei sich die zweiten Leitungsabschnitte (311) alternierend an gegenüberliegenden Seiten des Formsteins (304) erstrecken, sodass die elektrischen Leitungen (1, 2, 3) jeweils einen serpentinenförmigen Weg durchlaufen,
• die ersten Leitungsabschnitte (310; 5x, 5y) der elektrischen Leitungen (1, 2, 3), die beim Betrieb der Anordnung die einzelnen Phasen (U, V, W) des Mehrphasen-Wechselstroms führen, in Fahrtrichtung der Fahrzeuge eine sich wiederholende Folge bilden, bei der auf einen ersten Leitungsabschnitt (5y) einer (1) der elektrischen Leitungen ein erster Leitungsabschnitt (5x) einer anderen (2) der elektrischen Leitungen folgt.

8. Verfahren nach Anspruch 7, wobei eine Mehrzahl der Formsteine (304) entlang einem Fahrweg (303) des Fahrzeuges hintereinander angeordnet wird, sodass sich die Längsrichtungen der durch die verschiedenen Formsteine (304) gebildeten Räume zur Aufnahme der ersten Leitungsabschnitte (310; 5x, 5y) im Wesentlichen parallel zueinander erstrecken, wobei die Längsrichtungen quer zur Fahrtrichtung des Fahrzeuges verlaufen.

9. Verfahren nach Anspruch 7 oder 8, wobei eine Mehrzahl der Formsteine (304) zwischen den Fahrschienen (303a, 303b) eines Schienenweges für Schienenfahrzeuge hintereinander angeordnet wird, sodass die Längsrichtungen der Räume zur Aufnahme der ersten Leitungsabschnitte (310; 5x, 5y) in einer im Wesentlichen horizontalen Ebene und quer zur Fahrtrichtung des Fahrzeuges verlaufen.

## Claims

1. An arrangement for the inductive transmission of energy from a route to a vehicle travelling along the route, wherein the arrangement comprises:
- a shaped block (304) for positioning and/or holding a plurality of line sections (310; 5x, 5y) of one or several electric lines along a travel path of a vehicle, wherein the shaped block (304) comprises a plurality of recesses (315) and/or projections, wherein edges of the recesses (315) and/or the projections for the line sections (310; 5x, 5y) delimit respectively a space, in which one of the line sections (310; 5x, 5y) can be introduced so that it extends in a longitudinal direction of the space through the space, and wherein the longitudinal directions of the spaces delimited by the edges of the recesses (315) and/or by the projections extend essentially parallel to one another in a common plane,
- the line sections (310; 5x, 5y), which extend through the spaces,
wherein the shaped block (310; 5x, 5y) consists of an electrically insulating material, **characterized in that**
• at least two continuous electric lines (1, 2, 3) form the line sections (310; 5x, 5y), wherein each of the electric lines (1, 2, 3) is designed and during operation of the arrangement operated in such a way that it conveys one phase (U, V, W) of a plural phase alternating current,
• in each case a part of the line sections (310; 5x, 5y) is formed by one of the electric lines (1, 2, 3) so that first line sections (310; 5x, 5y) extending in the course of each of the electric lines (1, 2, 3) in longitudinal direction through the spaces are connected with one another via other second line sections (311) of the electric line (1, 2, 3) and wherein the second line sections (311) extend alternating on opposite sides of the shaped block (304) so that the electric lines (1, 2, 3) respectively pass through a serpentine shaped path,
• the first line sections (310; 5x, 5y) of the electric lines (1, 2, 3), which during operation of the arrangement convey the individual phases (U, V, W) of the polyphase alternating current, form in direction of travel of the vehicles a repeating sequence, in which a first line section (5x) of another (2) of the electric lines follows a first line section (5y) of one (1) of the electric lines.

2. The arrangement according to the preceding claim, wherein the recesses (315) with the longitudinal directions extend essentially parallel to one another on a surface of the shaped block (304).

3. The arrangement according to one of the preceding claims, with a lid (305) that covers the line sections (310; 5x, 5y) extending through the spaces.

4. The arrangement according to one of the preceding claims, wherein a plurality of shaped blocks (304) is arranged along a travel path (303) of the vehicle one after another so that the longitudinal directions of the spaces formed by the different shaped blocks (304) for receiving the line sections (310; 5x, 5y) extend essentially parallel to one another, wherein the longitudinal directions extend crosswise to the direction of travel of the vehicle.

5. The arrangement according to one of the preceding claims, wherein a plurality of the shaped blocks (304) is arranged one after another between the rails (303a, 303b) of a railway for rail vehicles so that the longitudinal directions of the spaces for supporting the line sections (310; 5x, 5y) extend in an essentially horizontal plane and crosswise to the direction of travel of the vehicle.

6. The arrangement according to one of the preceding claims, wherein the arrangement comprises at least one lamp (360) and a current detection device (361), wherein the current detection device (361) is combined in such a way with an electric line (310, 311), which forms at least one of the line sections (310; 5x, 5y), and with the lamp (360) so that the lamp (360) emits light when electric current flows through the line.

7. A method for producing an arrangement for the inductive transmission of energy from a route to a vehicle travelling on the route, wherein
• for positioning and/or holding a plurality of line sections (310; 5x, 5y) of one or several electric lines along a travel path of a vehicle at least one shaped block (304) is provided, which comprises a plurality of recesses (315) and/or projections, wherein edges of the recesses (315) and/or the projections for the line sections (310; 5x, 5y) delimit respectively a space, in which one of the line sections (310; 5x, 5y) can be introduced so that it extends in a longitudinal direction of the space through the space, and wherein the longitudinal directions of the spaces delimited by the edges of recesses (315) and/or by the projections extend essentially parallel to one another in a common plane,
• the shaped block (310; 5x, 5y) consists of an electrically insulating material,
• at least one electric line is introduced in such a way into the spaces that line sections (310; 5x, 5y) of the line extend in longitudinal direction through the spaces,
**characterized in that**
• by using at least two continuous electric lines (1, 2, 3) the line sections (310; 5x, 5y) are formed, wherein each of the electric lines (1, 2, 3) is designed and during operation of the arrangement operated in such a way that it conveys one phase (U, V, W) of a plural phase alternating current,
• the lines (1, 2, 3) are introduced in such a way into the spaces that in each case a part of the line sections (310; 5x, 5y) is formed by one of the continuous electric lines (1, 2, 3) so that first line sections (310; 5x, 5y) extending in the course of each of the electric lines (1, 2, 3) in longitudinal direction through the spaces are connected with one another via other second line sections (311) of the electric line and wherein the second line sections (311) extend alternating on opposite sides of the shaped block (304) so that the electric lines (1, 2, 3) respectively pass through a serpentine shaped path,
• the first line sections (310; 5x, 5y) of the electric lines (1, 2, 3), which during operation of the arrangement convey the individual phases (U, V, W) of the plural phase alternating current, form in direction of travel of the vehicles a repeating sequence, in which a first line section (5x) of another (2) of the electric lines follows a first line section (5y) of one (1) of the electric lines.

8. The method according to claim 7, wherein a plurality of shaped blocks (304) is arranged along a travel path (303) of a vehicle one after another so that the longitudinal directions of the spaces formed by the different shaped blocks (304) for receiving the first line sections (310; 5x, 5y) extend essentially parallel to one another, wherein the longitudinal directions run crosswise to the direction of travel of the vehicle.

9. The method according to claim 7 or 8, wherein a plurality of the shaped blocks (304) is arranged one after another between the rails (303a, 303b) of a railway for rail vehicles so that the longitudinal directions of the spaces for receiving the first line sections (310; 5x, 5y) run in an essentially horizontal plane and crosswise to the direction of travel of the vehicle.

## Revendications

1. Ensemble servant à transmettre par induction une énergie d'un tronçon à un véhicule circulant le long du tronçon, sachant que l'ensemble présente :
- un pavé moulé (304) servant à positionner et/ou à maintenir une pluralité de sections de conducteur (310 ; 5x, 5y) d'un ou de plusieurs conducteurs électriques le long d'une voie de circulation d'un véhicule, sachant que le pavé moulé (304) présente une pluralité d'évidements (315) et/ou de parties faisant saillie, sachant que des bords des évidements (315) et/ou les parties faisant saillie délimitent, pour les sections de conducteur (310 ; 5x, 5y), respectivement un espace, dans lequel une des sections de conducteur (310 ; 5x, 5y) peut être introduite de sorte que ladite section de conducteur s'étend à travers l'espace dans une direction longitudinale de l'espace, et sachant que les directions longitudinales des espaces délimités par les bords des évidements (315) et/ou par les parties faisant saillie s'étendent essentiellement de manière parallèle les unes par rapport aux autres dans un plan commun,
- les sections de conducteur (310 ; 5x, 5y), qui s'étendent à travers les espaces,
sachant que le pavé moulé (310 ; 5x, 5y) est constitué d'un matériau à isolation électrique,
**caractérisé en ce**
- **qu'**au moins deux conducteurs électriques (1, 2, 3) traversants forment les sections de conducteur (310 ; 5x, 5y), sachant que chacun des conducteurs électriques (1, 2, 3) est configuré et fonctionne lors du fonctionnement de l'ensemble de telle manière qu'il conduit une phase (U, V, W) d'un courant alternatif polyphasé,
- en ce que respectivement une partie des sections de conducteur (310 ; 5x, 5y) est formée par un des conducteurs électriques (1, 2, 3) de sorte que des premières sections de conducteur (310 ; 5x, 5y) s'étendant le long de chacun des conducteurs électriques (1, 2, 3) dans la direction longitudinale à travers les espaces sont reliées les unes aux autres par l'intermédiaire d'autres deuxièmes sections de conducteur (311) du conducteur électrique (1, 2, 3) et sachant que les deuxièmes sections de conducteur (311) s'étendent en alternance au niveau de côtés se faisant face du pavé moulé (304) de sorte que les conducteurs électriques (1, 2, 3) parcourent respectivement une voie en forme de serpentin,
- en ce que les premières sections de conducteur (310 ; 5x, 5y) des conducteurs électriques (1, 2, 3), qui conduisent, lors du fonctionnement de l'ensemble, les diverses phases (U, V, W) du courant alternatif polyphasé, forment, dans le sens de marche des véhicules, une suite répétitive, dans le cadre de laquelle une première section de conducteur (5x) d'un autre conducteur électrique (2) des conducteurs électriques suit une première section de conducteur (5y) d'un conducteur électrique (1) des conducteurs électriques.

2. Ensemble selon la revendication précédente, sachant que les évidements (315) s'étendent avec les directions longitudinales essentiellement de manière parallèle les uns par rapport aux autres au niveau d'une surface du pavé moulé (304).

3. Ensemble selon l'une quelconque des revendications précédentes, comprenant un couvercle (305), qui couvre les sections de conducteur (310 ; 5x, 5y) s'étendant à travers les espaces.

4. Ensemble selon l'une quelconque des revendications précédentes, sachant qu'une majorité des pavés moulés (304) sont disposés les uns derrière les autres le long d'une voie de circulation (303) du véhicule de sorte que les directions longitudinales des espaces formés par les divers pavés moulés (304) servant à recevoir les sections de conducteur (310 ; 5x, 5y) s'étendent essentiellement de manière parallèle les unes par rapport aux autres, sachant que les directions longitudinales s'étendent de manière transversale par rapport au sens de marche du véhicule.

5. Ensemble selon l'une quelconque des revendications précédentes, sachant qu'une majorité des pavés moulés (304) sont disposés les uns derrière les autres entre les rails de circulation (303a, 303b) d'une voie ferrée pour des véhicules sur rails de sorte que les directions longitudinales des espaces servant à recevoir les sections de conducteur (310 ; 5x, 5y) s'étendent dans un plan essentiellement horizontal et de manière transversale par rapport au sens de marche du véhicule.

6. Ensemble selon l'une quelconque des revendications précédentes, sachant que l'ensemble présente au moins un moyen d'éclairage (360) et un système de détection de courant (361), sachant que le système de détection de courant (361) est combiné avec un conducteur électrique (310, 311), qui forme au moins une des sections de conducteur (310 ; 5x, 5y), et avec le moyen d'éclairage (360) de telle manière que le moyen d'éclairage (360) éclaire lorsqu'un courant électrique circule à travers le conducteur.

7. Procédé servant à fabriquer un ensemble servant à transmettre par induction de l'énergie depuis un tronçon vers un véhicule circulant le long du tronçon, sachant
- qu'est fourni, afin de positionner et/ou de maintenir une majorité de sections de conducteur (310 ; 5x, 5y) d'un ou de plusieurs conducteurs électriques le long d'une voie de circulation d'un véhicule, au moins un pavé moulé (304), qui présente une majorité d'évidements (315) et/ou de parties faisant saillie, sachant que des bords des évidements (315) et/ou les parties faisant saillie délimitent, pour les sections de conducteur (310 ; 5x, 5y), respectivement un espace, dans lequel une des sections de conducteur (310 ; 5x, 5y) peut être introduite de sorte que ladite section de conducteur s'étend à travers l'espace dans une direction longitudinale de l'espace, et sachant que les directions longitudinales des espaces délimités par les bords des évidements (315) et/ou par les parties faisant saillie s'étendent essentiellement de manière parallèle les unes par rapport aux autres dans un plan commun,
- que le pavé moulé (310 ; 5x, 5y) est constitué d'un matériau à isolation électrique,
- qu'au moins un conducteur électrique est introduit dans les espaces de telle manière que des sections de conducteur (310 ; 5x, 5y) du conducteur s'étendent dans la direction longitudinale à travers les espaces, **caractérisé en ce que** :
- les sections de conducteur (310 ; 5x, 5y) sont formées en utilisant au moins deux conducteurs électriques (1, 2, 3) traversants, sachant que chacun des conducteurs électriques (1, 2, 3) est configuré et fonctionne lors du fonctionnement de l'ensemble de telle manière qu'il conduit une phase (U, V, W) d'un courant alternatif polyphasé,
- les conducteurs (1, 2, 3) sont introduits dans les espaces de telle manière que respectivement une partie des sections de conducteur (310 ; 5x, 5y) est formée par un des conducteurs électriques (1, 2, 3) traversants de sorte que des premières sections de conducteur (310 ; 5x, 5y) s'étendant le long de chacun des conducteurs électriques (1, 2, 3) dans la direction longitudinale à travers les espaces sont reliées entre elles par l'intermédiaire d'autres deuxièmes sections de conducteur (311) du conducteur électrique, et sachant que les deuxièmes sections de conducteur (311) s'étendent en alternance au niveau de côtés se faisant face du pavé moulé (304) de sorte que les conducteurs électriques (1, 2, 3) parcourent respectivement une voie en forme de serpentin,
- les premières sections de conducteur (310 ; 5x, 5y) des conducteurs électriques (1, 2, 3), qui conduisent, lors du fonctionnement de l'ensemble, les diverses phases (U, V, W) du courant alternatif polyphasé, forment, dans le sens de marche des véhicules, une suite répétitive, dans le cadre de laquelle une première section de conducteur (5x) d'un autre conducteur électrique (2) des conducteurs électriques suit une première section de conducteur (5y) d'un conducteur électrique (1) des conducteurs électriques.

8. Procédé selon la revendication 7, sachant que majorité des pavés moulés (304) sont disposés les uns derrière les autres le long d'une voie de circulation (303) du véhicule, de sorte que les directions longitudinales des espaces formés par les différents pavés moulés (304) servant à recevoir les premières sections de conducteur (310 ; 5x, 5y) s'étendent essentiellement de manière parallèle les unes par rapport aux autres, sachant que les directions longitudinales s'étendent de manière transversale par rapport au sens de marche du véhicule.

9. Procédé selon la revendication 7 ou 8, sachant qu'une majorité des pavés moulés (304) sont disposés les uns derrière les autres entre les rails de circulation (303a, 303b) d'une voie ferrée pour des véhicules sur rails de sorte que les directions longitudinales des espaces servant à recevoir les premières sections de conducteur (310 ; 5x, 5y) s'étendent dans un plan essentiellement horizontal et de manière transversale par rapport au sens de marche du véhicule.
